(19) Europäisches Patentamt
European Patent Office
Office européen des brevets

(11) **EP 2 530 867 B1**

(12) **FASCICULE DE BREVET EUROPEEN**

(45) Date de publication et mention
de la délivrance du brevet:
**14.01.2015 Bulletin 2015/03**

(51) Int Cl.:
***G09C 1/00*** *(2006.01)*      ***H04L 9/06*** *(2006.01)*

(21) Numéro de dépôt: **12169905.2**

(22) Date de dépôt: **30.05.2012**

(54) **Procédé de traitement cryptographique de données**

Verfahren zur kryptographischen Verarbeitung von Daten

Cryptographic data-processing method

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.05.2011 FR 1154793**

(43) Date de publication de la demande:
**05.12.2012 Bulletin 2012/49**

(73) Titulaire: **Oberthur Technologies**
**92700 Colombes (FR)**

(72) Inventeurs:
• **Prouff, Emmanuel**
**75018 PARIS (FR)**
• **Genelle, Laurie**
**95270 SAINT MARTIN DU TERTRE (FR)**

(74) Mandataire: **Santarelli**
**49, avenue des Champs-Elysées**
**75008 Paris (FR)**

(56) Documents cités:
**EP-A1- 2 296 307**

• **LAURIE GENELLE ET AL: "Secure Multiplicative
Masking of Power Functions", 22 juin 2010
(2010-06-22), APPLIED CRYPTOGRAPHY AND
NETWORK SECURITY, SPRINGER BERLIN
HEIDELBERG, BERLIN, HEIDELBERG, PAGE(S)
200 - 217, XP019144590, ISBN: 978-3-642-13707-5
* section 4.1 section 4.3; figure 1 ***
• **MATTHIEU RIVAIN ET AL: "Provably Secure
Higher-Order Masking of AES", 17 août 2010
(2010-08-17), CRYPTOGRAPHIC HARDWARE
AND EMBEDDED SYSTEMS, CHES 2010,
SPRINGER BERLIN HEIDELBERG, BERLIN,
HEIDELBERG, PAGE(S) 413 - 427, XP019148569,
ISBN: 978-3-642-15030-2 * section 2.4 Algorithms
1 and 3; page 420 ***

**Description**

La présente invention concerne un procédé de traitement cryptographique de données, en particulier pour les protéger contre les attaques par analyse par canal auxiliaire, appelées SCA (de l'anglais "side channel analysis"), notamment l'attaque appelée DPA (de l'anglais "differential power analysis"), ainsi qu'un dispositif associé. Elle s'applique, en particulier à la protection de contenus à maintenir secrets ou de circuits électroniques et de cartes à microcircuit.

Dans certains procédés de traitement de données, en particulier dans le cadre du traitement cryptographique de données, on utilise, au sein des algorithmes de traitement, des données qui doivent rester secrètes (telles que par exemple des clés cryptographiques) pour assurer le fonctionnement du système avec la sécurité requise. Ce type de procédé est dès lors la cible d'attaques de la part d'utilisateurs malveillants qui cherchent à déjouer la sécurité du système.

La DPA est une attaque qui permet d'obtenir des informations sur la clé secrète (contenue dans une carte à puce par exemple), en effectuant une analyse statistique des enregistrements de consommation électrique, mesurés sur un grand nombre de calculs avec la même clé. Cette attaque ne requiert aucune connaissance sur la consommation électrique individuelle de chaque instruction, ni sur la position dans le temps de chacune de ces instructions. Elle s'applique exactement de la même manière dès que l'attaquant connaît les sorties de l'algorithme et les courbes de consommation correspondantes.

On connaît une contre-mesure générique consistant à séparer toutes les variables intermédiaires (Suresh Chari, Charanjit S. Jutla, Josyula R. Rao et Pankaj Rohatgi, "Towards Sound Approaches to Counteract Power-Analysis Attacks", Proceedings of Advances in Cryptology - CRYPTO'99, Springer-Verlag, 1999, pages. 398-412). Or cette méthode générale augmente fortement les ressources nécessaires, quantité de mémoire et/ou temps de calcul. De plus, les étapes intermédiaires peuvent aussi être attaquées par DPA, si bien que la séparation des variables doit être effectuée sur toutes les étapes de l'algorithme. Cela rend d'autant plus important le problème de la consommation de ressources supplémentaire, en particulier pour des systèmes embarqués tels que les cartes à puce.

A la même époque, la publication "DES and differential power analysis (the "duplication" method)" (Louis Goubin et Jacques Patarin; CHES '99, volume 1717 de Lecture Notes in Computer Science, pages 158-172. Springer-Verlag, 1999) a décrit une contre-mesure générale, consistant à masquer toutes les entrées et sorties de chaque opération élémentaire exécutée par le microprocesseur. Pour se protéger contre les attaques appelées SCA (pour " side channel analysis " ou analyse par canal auxiliaire), notamment l'attaque DPA (" differential power analysis "), on connaît ainsi la mise en oeuvre d'un masquage additif dont l'équation est:

$$X \text{ XOR } m$$

où X est dans le corps de Galois $GF(2^8)$ [c'est-à-dire un octet] plus généralement dans un corps de Galois $GF(2^n)$; XOR est la fonction "ou exclusif' qui opère sur chaque paire de bits de X et m séparément et associe à une couple (0,0) la valeur 0, au couple (0,1), la valeur 1, au couple (1,0), la valeur 1 et au couple (1,1), la valeur 0; et $m$ est un nombre aléatoire aussi appelé "masque".

Les explications ci-dessous s'appliquent également lorsque la donnée secrète X est constituée de plusieurs mots ou octets.

On note que, lorsqu'un bit de $m$ vaut 1, la valeur du bit correspondant de X est inversée lors du masquage additif et que, lorsqu'un bit de $m$ vaut 0, la valeur du bit correspondant de X est conservée lors du masquage additif. Ce qui implique que (X XOR m) XOR m = X: l'inverse d'un nombre pour la loi XOR est donc le nombre lui-même. Le démasquage additif est ainsi effectué avec la même opération que le masquage additif.

Cette particularité permet que, si une fonction de transformation "transfo" est linéaire par rapport à la fonction XOR, soit:

$$\text{transfo} (X \text{ XOR } m) = \text{transfo} (X) \text{ XOR transfo} (m)$$

le démasquage additif est réalisé par transfo (X XOR m) XOR transfo (m). Si on enchaîne plusieurs transformations linéaires successives, il suffit d'enlever le masque transformé (par la composition des transformations linéaires successives) à la fin de la dernière transformation linéaire.

Des fonctions linéaires autres que XOR peuvent également être utilisées, par exemple l'addition modulaire.

Un tel masquage s'avère ainsi efficace pour des transformations affines ou linéaires.

Cependant, certains traitements cryptographiques, tel le chiffrement AES ("Advanced Encryption Standard"), peuvent comporter une succession de transformations mélangeant transformations linéaires et non linéaires. Les fonctions non linéaires utilisées sont généralement des fonctions de type multiplicatives, faisant notamment intervenir des puissances.

Dans le chiffrement AES par exemple chaque ronde comporte une transformation non linéaire appelée "MIT" (pour "Multiplicative inverse Transformation") suivie de quatre transformations linéaires (respectivement, "AT" (pour "Affine Transformation"), *ShiftRows, MixColumns* et *AddRoundKey*).

Dans l'état de la technique, notamment illustré par le document US 2008/260145 ou la publication "*Secure multiplicative masking of power functions*" (Laurie Genelle, Emmanuel Prouff, Michaël Quisquater, 2010), pour permettre le calcul masqué de MIT en conservant le masquage additif, MIT a été adaptée. Cependant, la transformation MIT adaptée est plus coûteuse en ressources, notamment en espace mémoire et/ou en temps de traitement.

Ainsi, dans la publication EP2296307, il a pu être prévu de convertir le masquage additif des données secrètes en un masquage multiplicatif, juste avant d'appliquer la transformation MIT non adaptée sur les données alors masquées par masquage multiplicatif.

Bien qu'il soit fait référence, pour le masquage, à la multiplication classique, un masquage multiplicatif peut également s'appuyer sur l'opération de groupe "multiplication modulaire". Généralement, les deux lois sur lesquelles s'appuient les masquages additif et multiplicatif peuvent être les deux lois d'un corps, d'où l'appellation "additive" pour la première loi et l'appellation "multiplicative" pour la seconde loi.

Comme il ressort clairement de cette publication, la conversion entre masquage est généralement précédée d'une étape de mise en correspondance de $GF(2^n)$ dans $GF(2^n)^*$, afin de fournir une résistance suffisante aux attaques SCA quand X=0. Par exemple, à cette occasion, X peut être substitué par X XOR $\delta(X)$, où $\delta$ est la fonction Dirac. La conversion correspondante du masquage multiplicatif vers le masquage additif est alors suivie d'une mise en correspondance de $GF(2^n)^*$ dans $GF(2^n)$, afin de rétablir la situation initiale pour la poursuite des calculs cryptographiques (notamment les opérations linéaires).

Toutefois dans cette publication EP2296307, la conversion du masquage additif en masquage multiplicatif (ou la réciproque) est conçue pour un masquage simple, c'est-à-dire lorsque la donnée secrète est masquée par une unique valeur de masquage *m.*

Or il est fréquent d'avoir recours à un masquage d'ordre d plus élevé, afin d'accroître la sécurité des mises en oeuvre physiques des traitements cryptographiques. Ce masquage fait alors intervenir un plus grand nombre de masques.

Ainsi, un masquage, qu'il soit additif ou multiplicatif, d'ordre d implique généralement la relation suivante:

$$X_0 \perp X_1^{-1} \perp \ldots \perp X_d^{-1} = X$$

où 1 est l'opération de groupe considérée (notamment l'addition XOR ou la multiplication); et Xi-1 est l'inverse de X pour l'opération 1 (par exemple, Xi-1=Xi pour l'addition XOR et Xi-1=1/Xi pour la multiplication si Xi $\neq$ 0).

Les d masques (Xi)1≤i≤d sont des valeurs aléatoires (aléas) et permettent de déduire la valeur masquée Xo à partir de la donnée secrète X.

La donnée secrète X peut donc être vue comme étant séparée en *d+1* parties (Xi)0≤i≤d chacune jouant, au final, un rôle symétrique.

Réciproquement, la donnée secrète X ne peut être déduite à l'aide de moins de *d+1* données (ici les (Xi)0≤i≤d), assurant de la sorte une protection dite "à l'ordre d".

Une telle technique ainsi que l'utilisation d'aléa dans sa sécurisation est décrite dans la publication "Provably secure Higer-order Masking of AES" (Matthieu Rivain, Emmanuel Prouff, 2010)

Pour la suite des explications, on parlera ainsi de "parties additives" dès lors que l'opération de masquage correspondante est de type additive (XOR ou addition modulaire notamment): Xo + X1-1 + ... + Xd-1 = X. Dans le cas d'un masquage de type XOR, on a donc

$$\sum_{0 \le i \le d} X_i = X \quad \text{et} \quad X_0 = X + \sum_{1 \le i \le d} X_i .$$

De même, on parlera de "parties multiplicatives" dès lors que l'opération de masquage correspondante est de type multiplicative (multiplication modulaire ou non notamment): Xo X1-1 ... Xd-1 = X.

La référence à une partie X ou à son inverse Xi-1 dépend principalement de la notation adoptée: soit Xo 1 X1-1 $\perp$ ... 1 Xd-1 = X, soit Xo $\perp$ Xi $\perp$ ... $\perp$ Xd = X.

De ce fait, par la suite, on fera principalement référence aux parties additives ou multiplicatives, et non à leurs inverses (qui en découlent directement), sauf lorsque cette précision s'avère nécessaire.

Afin d'améliorer les performances du chiffrement AES lorsque les données secrètes sont masquées à l'ordre d, les inventeurs ont envisagé de mettre en oeuvre une conversion entre le masquage additif et le masquage multiplicatif adaptée. En d'autres termes, il s'agit d'une conversion entre une séparation additive d'ordre d, c'est-à-dire en *d+1* parties additives ("*additive shares*" en anglais), et une séparation multiplicative d'ordre *d*, c'est-à-dire en *d+1* parties multiplicatives (*"multiplicative shares*" en anglais).

Dans le cas où l'on dispose initialement d'une séparation additive d'ordre *d* de la donnée secrète X en *d+1* parties additives, la conversion de la séparation additive d'ordre *d* de la donnée secrète en une séparation multiplicative d'ordre *d* de cette même donnée secrète en *d+1* parties multiplicatives, peut comprendre les étapes suivantes:

- générer aléatoirement *d* parties multiplicatives;
- appliquer successivement, lors de *d* itérations correspondantes, chacune des *d* parties multiplicatives générées, en multipliant des parties additives courantes de la donnée secrète par la partie multiplicative correspondant à l'itération courante; et
- sommer les parties additives courantes de la donnée secrète résultant de la multiplication lors de l'itération finale pour obtenir une *d+1$^{ème}$* partie multiplicative.

Les *d* itérations permettent dans ce cas d'appliquer progressivement les *d* masques multiplicatifs générés aléatoirement. En outre, la sommation finale permet de ne faire disparaître le masquage additif que lorsque l'entièreté du masquage multiplicatif est en place. La donnée secrète n'est ainsi jamais révélée isolément, puisqu'elle est masquée en permanence par au moins *d* masques.

Toutefois, ce traitement ne garantit pas une sécurisation à l'ordre d, en raison notamment du fait que, puisque les parties additives ($X_i$) sont successivement multipliées par les d masques multiplicatifs (notons les "$Z_i$"), la combinaison de ceux-ci (c'est-à-dire le sous-produit $\prod_{1 \le j \le d} Z_j$ ) peut être aisément obtenue à l'aide d'une partie additive initiale ($X_i$) et d'une partie additive finale avant sommation car celle-ci vaut $X_i \prod_{1 \le j \le d} Z_j$. Dès lors, la donnée secrète X peut être déduite à partir de ces deux valeurs et de la donnée secrète masquée résultant de la sommation finale (qui vaut $X \prod_{1 \le j \le d} Z_j$ ). Il existe donc une fuite à l'ordre 3.

Cette conversion n'est donc protégée des attaques SCA que jusqu'à l'ordre 2.

La présente invention vise à améliorer cette situation, afin d'obtenir, une protection à un meilleur ordre lors de étapes de conversion. Certains modes de réalisation permettront d'ailleurs d'atteindre une protection à l'ordre *d*.

Dans ce dessein, la présente invention prévoit que l'étape de conversion comprend en outre, lors d'au moins une dite itération, la génération d'au moins un aléa et l'introduction dudit au moins un aléa généré dans les parties additives courantes résultant de la multiplication lors de cette itération, de sorte à obtenir des parties additives aléatoires constituant les parties additives courantes pour une itération suivante.

Les parties additives de la donnée secrète sont dites "courantes" en raison de leur évolution au cours des itérations successives.

L'invention permet ainsi de gagner au moins un degré de sécurisation lors de la conversion de masquage dans le traitement cryptographique.

Cela est rendu possible par l'introduction d'un aléa au niveau des parties additives courantes de la donnée secrète, avant d'appliquer un nouveau masque multiplicatif lors de l'itération suivante. L'aléa ainsi introduit vient protéger la combinaison mentionnée précédemment des parties multiplicatives appliquées.

En effet, l'introduction d'aléas tend à éviter la manipulation (lors des opérations élémentaires composant la conversion) de sous-produits des parties multiplicatives.

Comme on le verra par la suite, l'introduction d'aléas lors de plusieurs itérations permettra d'obtenir une sécurisation d'ordre d de la donnée secrète.

Dans un mode de réalisation, lors de l'au moins une dite itération, on génère un nombre d'aléas différents égal au nombre de parties additives courantes moins 2.

Lors d'une conversion progressive (c'est-à-dire le degré de masquage additif diminue dans une même mesure que le degré de masquage multiplicatif augmente), cette approche correspond également à, lors d'une k$^{ème}$ itération, générer un nombre d'aléas différents égal à *d*-k.

Bien entendu, un plus grand nombre d'aléas pourra être utilisé, mais s'avère essentiellement superflu.

Cette configuration offre une optimisation forte du nombre d'aléas utilisés. En effet, celui-ci est réduit au minimum.

L'incorporation d'un masque multiplicatif (c'est-à-dire d'une partie multiplicative) à chaque itération fait qu'une des parties additives devient superflue dans la protection à l'ordre $d$ de la donnée secrète. Il n'y a donc pas nécessairement lieu de protéger celle-ci selon les enseignements de l'invention, permettant de diminuer d'autant le nombre d'aléas nécessaires pour protéger les parties additives courantes.

En outre, du fait des propriétés de la séparation additive, une des parties additives peut être protégée à l'aide d'une combinaison des aléas nouvellement introduits, évitant de la sorte l'utilisation superflue d'un autre aléa.

Ce sont donc deux aléas qui peuvent être évités à chaque itération, comparativement au nombre de parties additives courantes.

Bien entendu, en variante, lors de l'au moins une dite itération, on peut générer un nombre d'aléas différents égal au nombre de parties additives courantes moins 1. Cette configuration moins optimisée offre néanmoins l'avantage d'un systématisme et d'un traitement similaire pour les parties additives dont le nombre peut, dans ce cas, être conservé d'une itération à l'autre. Par exemple, on conserve $d$+1 parties additives à chaque itération, et on génère d aléas à chaque itération.

Cette configuration peut également s'appliquer lorsque l'on réduit de 1 le nombre de parties additives courantes à chaque itération. Dans ce cas, à chaque itération, un des aléas est intégré à chaque nouvelle partie additive conservée.

Dans un mode de réalisation de l'invention, lors de l'au moins une dite itération, on additionne chaque aléa généré à une partie additive courante respective résultant de la multiplication lors de cette itération (par la partie multiplicative correspondant à cette itération); et les parties additives courantes pour l'itération suivante sont composées de l'ensemble des inverses des aléas générés (les inverses selon l'addition, c'est-à-dire les aléas eux-mêmes dans le cas particulier de la loi XOR) lors de ladite itération et de la somme (au sens de l'opération de groupe définissant la séparation additive) des parties additives résultant de la multiplication le cas échéant modifiées par un dit aléa généré.

On comprend ici, que lorsque l'on génère deux aléas en moins que le nombre de parties additives courantes, à chaque itération, le nombre de parties additives diminue de 1. Cette diminution du masquage additif est compensée par l'introduction de la partie multiplicative lors de l'itération précédente, c'est-à-dire un nouveau masque multiplicatif. Cette configuration optimise donc l'utilisation mémoire puisque le strict minimum d'informations est conservé en mémoire.

En outre, de par les propriétés de l'addition, la somme de toutes les parties additives courantes le cas échéant modifiées par un nouvel aléa permet de faire disparaître, d'une itération à l'autre, les aléas introduits à l'itération précédente. Ainsi, dans cette configuration, il n'y a besoin de mémoriser qu'un nombre minimal d'aléa (effectué concrètement au niveau des "nouvelles" parties additives obtenues).

En variante, on pourra tout aussi bien garder, comme parties additives courantes, les parties additives résultant de la multiplication modifiées par un dit aléa généré et la somme des inverses des aléas générés (ou les aléas dans le cas de la loi XOR) avec les parties additives résultant de la multiplication non modifiées par ajout d'un aléa. En effet, les opérations sont symétriques, les données étant finalement sommées lorsque toutes les parties multiplicatives (masques multiplicatifs) ont été appliquées.

Dans une autre variante, ladite somme pourrait combiner, avec les parties additives non modifiées, certains inverses d'aléas générés et certaines parties additives modifiées par d'autres aléas. Dans ce cas, les autres inverses d'aléas et les autres parties additives modifiées sont pris individuellement comme chacune des autres parties additives courantes pour l'itération suivante. Bien entendu, afin de conserver un niveau de sécurité élevé, les inverses d'aléas pris en compte dans la somme ne correspondent pas aux aléas introduits dans les parties modifiées par aléa également prises en compte dans cette somme.

A noter enfin que les aléas eux-mêmes et non leur inverse peuvent être mémorisées auquel cas les opérations additives réalisées par la suite sur leur base devront être inversées.

Dans un autre mode de réalisation, lors de l'au moins une dite itération, on génère un nombre d'aléas différents égal au nombre de parties additives courantes résultant de la multiplication lors de cette itération.

Selon une caractéristique particulière, lors de l'au moins une dite itération, on sépare, chaque partie additive courante résultant de la multiplication lors de cette itération en au moins deux (généralement deux) parties additives courantes pour l'itération suivante, à l'aide d'un aléa généré propre pour chaque partie additive courante.

Cette configuration adopte une approche systématique sur l'ensemble des parties additives initiales et évite une recombinaison précoce des parties additives initiales de laquelle pourrait découler une fuite d'ordre $d$ ou inférieur de la donnée secrète.

Selon une caractéristique particulière de l'invention, l'au moins un aléa n'est généré et introduit qu'à partir de la deuxième itération. La première itération n'introduit donc aucun aléa en vue de la deuxième itération.

Cette disposition qui vise à réduire les calculs ne diminue pas pour autant la sécurité à l'ordre $d$ de la conversion.

En effet, lors des deux premières itérations avant introduction d'un aléa, seuls deux parties multiplicatives de la donnée secrète sont introduites, lesquelles ne peuvent être déduites à l'aide de moins de trois données manipulées. Du coup, une protection de celles-ci serait superflue avant cet instant puisque ces deux parties introduites sont directement manipulées.

Ce n'est qu'à partir de la troisième partie multiplicative introduite qu'un risque existerait. C'est pourquoi, l'introduction d'aléas n'intervient qu'avant l'introductuib de la troisième partie multiplicative.

Toutefois, l'introduction d'aléas "superflus" n'est pas à exclure dans le cadre général de l'invention.

Selon une caractéristique particulière, la conversion comprend au moins une succession de dites itérations, composée d'une première itération incluant une génération et une introduction d'au moins un aléa, suivie d'une unique itération sans générer et introduire d'aléa, suivie d'une deuxième itération incluant une génération et une introduction d'au moins un aléa.

Dans cette configuration, on réduit les calculs effectués sans pour autant nécessairement perdre en sécurité à l'ordre $d$.

En effet, deux parties multiplicatives qui sont appliquées consécutivement (c'est-à-dire suite à une itération sans introduire de nouvel aléa) ne peuvent être obtenues à l'aide de moins de trois données manipulées. Ce n'est qu'à partir de la troisième partie multiplicative introduite qu'un risque existerait (la combinaison des trois parties pourrait découler de deux données manipulées). C'est pourquoi, dans cette configuration et préalablement à cette troisième multiplication, on prévoit l'introduction de nouveaux aléas.

Plusieurs successions ainsi définies peuvent être mises en oeuvre. Pour les raisons exposées ci-dessus, il est en revanche prévu que deux itérations introduisant au moins un aléa chacune ne sont pas séparées par plus d'une itération sans introduire d'aléa.

Selon une autre caractéristique, toutes les itérations suivant une première itération incluant la génération et l'introduction d'au moins un aléa, sauf la dernière itération, comprennent la génération et l'introduction d'au moins un nouvel aléa.

Encore une fois, le systématisme appliqué ici permet de garantir la conservation d'un niveau de sécurité d'ordre $d$ de la donnée secrète. De plus, il n'y a nul besoin d'introduire de nouveaux aléas lors de la dernière itération puisqu'elle n'est pas suivie par une autre itération et puisque les parties additives courantes lors de cette itération sont définitivement sommées comme dernière partie multiplicative attendue.

Selon un mode de réalisation de l'invention, initialement, on sélectionne une première valeur parmi l'ensemble des parties additives séparant la donnée secrète et on définit un premier ensemble (dit "de parties additives") constitué des autres parties additives séparant la donnée secrète et un deuxième ensemble vide (dit "de parties multiplicatives") pour mémoriser les parties multiplicatives, et chaque itération k comprend les sous-étapes suivantes:

- sélectionner et ajouter, au deuxième ensemble, une desdites parties multiplicatives générées non encore utilisée;
- multiplier ladite première valeur et chaque élément du premier ensemble par ladite partie multiplicative sélectionnée;
- ajouter, à $d$-k éléments du premier ensemble, $d$-k aléas respectifs;
- sommer les éléments du premier ensemble ainsi obtenu avec ladite première valeur, de sorte à obtenir une dite première valeur pour l'itération suivante; et
- mémoriser les inverses des $d$-k aléas ajoutés (les inverses selon l'addition; et dans le cas de la loi XOR, on mémorise directement les $d$-$k$ aléas ajoutée) pour former un dit premier ensemble pour l'itération suivante.

Cette approche permet de faire évoluer les ensembles de parties additives et multiplicatives au fur et à mesure de la conversion itérative du masquage selon l'invention. Elle peut notamment facilement être mise en oeuvre à l'aide de moyens informatiques.

Ladite première valeur ainsi définie peut être vue comme étant la donnée secrète masquée sur laquelle on réalise la conversion de masquage.

Comme évoqué précédemment, on peut en variante sommer les inverses d'aléas ou une partie de ceux-ci, et donc conserver, dans le premier ensemble et pour l'itération suivante, les éléments auxquels ont été ajoutés les aléas, ou une partie de ceux-ci (avec le reste des inverses d'aléas).

Dans un mode de réalisation de l'invention, les $d$ parties multiplicatives sont générées, chacune, lors de l'itération au cours de laquelle cette partie multiplicative est multipliée aux parties additives courantes. On évite ainsi de stocker ces valeurs générées jusqu'à leur utilisation.

Dans le cas où l'on dispose initialement d'une séparation multiplicative d'ordre $d$ de la donnée secrète X en $d+1$ parties multiplicatives, la conversion de la séparation multiplicative d'ordre $d$ de la donnée secrète en une séparation additive d'ordre $d+1$ de cette même donnée secrète en $d+1$ parties additives peut comprendre les étapes suivantes:

- générer $d$ valeurs aléatoires et les ajouter successivement à une première partie multiplicative de la donnée secrète, lors de $d$ itérations correspondantes ;
- appliquer successivement, lors de ces $d$ itérations, chacune des $d$ autres parties multiplicatives de la donnée secrète, en multipliant des parties additives courantes, comprenant initialement ladite première partie multiplicative, par la partie multiplicative correspondant à l'itération courante; et
- obtenir lesdites $d+1$ parties additives de la donnée secrète, à partir des parties additives courantes résultant de la multiplication lors de l'itération finale.

Les *d* itérations permettent dans ce cas d'appliquer progressivement les *d* masques multiplicatifs générés aléatoirement, afin de procéder au démasquage multiplicatif et d'introduire un masquage additif progressif. Bien entendu, selon la notation adoptée, l'homme du métier comprendra, dans ce cas, qu'il convient d'appliquer les inverses des parties multiplicatives.

Les parties additives finales constituent une séparation de la donnée secrète. Si elles sont plus nombreuses que *d*+1 au sortir de la dernière itération, elles sont combinées (par addition notamment) afin d'obtenir les *d*+1 parties souhaitées.

De façon symétrique à la conversion d'une séparation additive en une séparation multiplicative, l'application successive des parties multiplicatives rend leur combinaison facilement accessible. Ainsi, cette conversion ne présente également qu'une sécurité jusqu'à l'ordre 2 contre des attaques du type SCA.

Dans un objectif d'améliorer cette situation, afin d'obtenir, dans les meilleures configurations, une protection à l'ordre *d* à toute étape de la conversion, l'invention prévoit que, dans ce cas de conversion d'une séparation multiplicative en une séparation additive, l'étape de conversion comprend en outre, lors d'au moins une dite itération, la génération d'au moins un aléa et l'introduction dudit au moins un aléa généré dans les parties additives courantes résultant de la multiplication de cette itération, de sorte à obtenir des parties additives aléatoires courantes pour une itération suivante.

Des avantages similaires à ceux de la conversion d'une séparation additive en une séparation multiplicative sont également obtenus.

Dans un mode de réalisation, la conversion comprend, lors de chaque itération, l'introduction de l'inverse d'une desdites valeurs aléatoires générées comme nouvelle partie additive courante avant la multiplication de l'itération. Il s'agit des inverses selon l'addition. Bien entendu, dans le cas de la loi additive XOR, on peut se limiter à introduite la valeur aléatoire générée qui est son propre inverse.

En variante, l'inverse de la valeur aléatoire pourrait être introduit en même temps que les aléas à l'itération précédente.

De façon symétrique aux mécanismes décrits ci-dessus pour la conversion d'un masquage additif vers un masquage multiplicatif, on cherche à chaque itération à remplacer un masque multiplicatif par un nouveau masque additif. L'augmentation du degré de masquage additif résulte ainsi de l'introduction d'une nouvelle partie additive aléatoire à chaque itération, alors que la diminution du masquage multiplicatif résulte du démasquage par ladite multiplication.

En variante, on peut introduire l'ensemble des valeurs aléatoires générées (ou inverses) comme parties additives courantes lors de la première itération. Toutefois, cette configuration augmente les calculs à réaliser lors des itérations et nécessite plus d'espace mémoire, notamment en début de conversion.

Une situation intermédiaire consiste à introduire progressivement ces valeurs, parfois plusieurs ensembles lors d'une même itération, de sorte qu'à chaque itération elles suffisent à compenser la perte de degré de protection par démasquage multiplicatif: pour l'itération k, on compte au moins k+1 parties additives courantes auxquelles on applique la multiplication.

Selon une caractéristique particulière, les *d* valeurs aléatoires sont générées, chacune, lors de l'itération au cours de laquelle l'inverse de cette valeur aléatoire est introduit comme nouvelle partie additive courante. On évite ainsi de stocker ces valeurs générées jusqu'à leur utilisation.

Dans un mode de réalisation, lors de l'au moins une dite itération, on génère un nombre d'aléas différents égal au nombre de parties additives courantes résultant de la multiplication lors de cette itération moins 1. Lors d'une conversion progressive (c'est-à-dire le degré de masquage multiplicatif diminue dans une même mesure que le degré de masquage additif augmente), cette approche correspond également à, lors d'une $k^{\text{ème}}$ itération, générer un nombre d'aléas différents égal à k.

Cette configuration optimise le nombre d'aléas utilisés.

Selon une caractéristique particulière, lors de l'au moins une dite itération, on additionne chaque aléa généré à une partie additive courante respective résultant de la multiplication lors de cette itération; et les parties additives courantes pour l'itération suivante sont composées de l'ensemble des inverses des aléas générés (les inverses selon l'addition, c'est-à-dire les aléas eux-mêmes dans le cas particulier de la loi XOR) lors de ladite itération et de la somme (au sens de l'opération de groupe définissant la séparation additive) des parties additives résultant de la multiplication le cas échéant modifiées par un dit aléa généré.

De façon similaire au cas de la conversion d'un masquage additif vers un masquage multiplicatif, une variante peut consister à conserver, comme parties additives courantes, les parties additives auxquelles ont été additionnés les aléas générés de l'itération et une somme des inverses des aléas générés avec la ou les parties additives non modifiées par ajout d'un aléa. Bien entendu, comme évoqué précédemment, une ou plusieurs valeurs aléatoires (ou leurs inverses) peuvent être introduites au début de l'itération suivante comme parties additives courantes additionnelles pour la multiplication de cette itération suivante.

Dans un mode de réalisation, lors de l'au moins une dite itération, on génère un nombre d'aléas différents égal au nombre de parties additives courantes résultant de la multiplication lors de cette itération.

Selon une caractéristique particulière, lors de l'au moins une dite itération, on sépare, chaque partie additive courante résultant de la multiplication lors de l'itération en au moins deux (généralement deux) parties additives courantes pour l'itération suivante, à l'aide d'un aléa généré propre pour chaque partie additive courante.

Dans le cas de la conversion d'un masquage multiplicatif vers un masquage additif, on peut prévoir que toutes les itérations sauf la dernière comprennent la génération et l'introduction d'au moins un nouvel aléa.

L'introduction d'un aléa dès la première itération vient du fait qu'à l'issue de la multiplication lors de cette première itération, il existe déjà une valeur manipulée combinant deux parties multiplicatives, à savoir la donnée secrète masquée à laquelle un premier démasquage multiplicatif a été appliqué. Un démasquage supplémentaire directement sur cette valeur diminuerait alors la protection d'un ordre.

Dans un autre mode de réalisation, la conversion comprend au moins une succession de dites itérations, composées d'une première itération incluant une génération et une introduction d'au moins un aléa, suivi d'une unique itération sans générer et introduire d'aléa, suivie d'une deuxième itération incluant une génération et une introduction d'au moins un aléa.

Cette configuration est similaire à celle décrite plus amplement ci-dessus pour la conversion d'un masquage additive en un masquage multiplicatif.

Selon un mode de réalisation de l'invention, initialement, on sélectionne une première valeur parmi l'ensemble des parties multiplicatives séparant la donnée secrète et on définit un premier ensemble vide (dit "de parties additives") pour mémoriser des parties additives et un deuxième ensemble (dit "de parties multiplicatives") constitué des autres parties multiplicatives séparant la donnée secrète, et chaque itération comprend les sous-étapes suivantes:

- sélectionner et ajouter, au premier ensemble, une desdites $d$ valeurs aléatoires générées non encore utilisée;
- ajouter la valeur aléatoire sélectionnée à ladite première valeur;
- multiplier ladite première valeur et chaque élément du premier ensemble par une partie multiplicative non encore utilisée et sélectionnée dans le deuxième ensemble;
- ajouter, à chaque élément du premier ensemble, un aléa respectif;
- sommer les éléments du premier ensemble ainsi obtenu avec ladite première valeur, de sorte à obtenir une dite première valeur pour l'itération suivante;
- mémoriser les inverses des aléas ajoutés (dans le cas de la loi XOR, on mémorise directement les $d$-$k$ aléas ajoutée) pour former un dit premier ensemble pour l'itération suivante.

Corrélativement, l'invention concerne également un dispositif de traitement cryptographique de données secrètes, caractérisé en ce qu'il comporte un module de conversion d'une séparation additive d'ordre $d$ de la donnée secrète X en $d$+1 parties additives en une séparation multiplicative d'ordre $d$ de cette même donnée secrète en $d$+1 parties multiplicatives, le module de conversion comprenant:

- un générateur aléatoire de $d$ parties multiplicatives;
- un moyen de traitement configuré pour appliquer successivement, lors de $d$ itérations correspondantes, chacune des $d$ parties multiplicatives générées, en multipliant des parties additives courantes de la donnée secrète par la partie multiplicative correspondant à l'itération courante; et
- un additionneur des parties additives de la donnée secrète résultant de la multiplication lors de l'itération finale pour obtenir une $d$+1$^{ème}$ partie multiplicative;

dispositif dans lequel le moyen de traitement du module de conversion comprend en outre, un générateur d'aléa configuré pour générer au moins un aléa lors d'au moins une dite itération et est configuré pour introduire, lors de l'au moins une dite itération, ledit au moins un aléa généré dans les parties additives courantes résultant de la multiplication lors de cette itération, de sorte à obtenir des parties additives aléatoires constituant les parties additives courantes pour une itération suivante.

Ce dispositif est adapté pour mettre en oeuvre la conversion d'une séparation additive de la donnée secrète en une séparation multiplicative de cette même donnée secrète.

Par ailleurs, l'invention concerne également un dispositif de traitement cryptographique de données secrètes, caractérisé en ce qu'il comporte un module de conversion d'une séparation multiplicative d'ordre $d$ de la donnée secrète X en $d$+1 parties multiplicatives en une séparation additive d'ordre $d$ de cette même donnée secrète en $d$+1 parties additives, le module de conversion comprenant:

- un générateur aléatoire de $d$ valeurs aléatoires;
- un moyen de traitement configuré pour ajouter successivement ces $d$ valeurs aléatoires générées à une première partie multiplicative de la donnée secrète, lors de $d$ itérations correspondantes; et pour appliquer successivement, lors de ces $d$ itérations, chacune des $d$ autres parties multiplicatives de la donnée secrète, en multipliant des parties additives courantes, comprenant initialement ladite première partie multiplicative, par la partie multiplicative correspondant à l'itération courante; et

- des moyens d'obtention pour obtenir lesdites *d+1* parties additives de la donnée secrète, à partir des parties additives courantes résultant de la multiplication lors de l'itération finale;

dispositif dans lequel le moyen de traitement du module de conversion comprend en outre, un générateur d'aléa configuré pour générer au moins un aléa lors d'au moins une dite itération et est configuré pour introduire, lors de l'au moins une dite itération, ledit au moins un aléa généré dans les parties additives courantes résultant de la multiplication lors de cette itération, de sorte à obtenir des parties additives aléatoires pour une itération suivante.

Ce dispositif est adapté pour mettre en oeuvre la conversion d'une séparation multiplicative de la donnée secrète en une séparation additive de cette même donnée secrète.

Les moyens mis en oeuvre peuvent notamment être de nature matérielle, tels que des circuits électroniques ou logiques.

De façon optionnelle, les dispositifs peuvent comprendre des moyens se rapportant aux caractéristiques des procédés respectifs de traitement exposés précédemment.

Comme exposé précédemment, l'invention peut s'inscrire dans le cadre d'une pluralité d'opérations successives sur une même donnée secrète masquée, lorsque ces opérations successives alternent au moins une opération linéaire de type affine et au moins une opération non linéaire de type multiplicative. En effet, dans ce cas, l'invention permet de convertir le masquage de la donnée secrète dans le type (additif ou multiplicatif) de masquage particulièrement bien adapté pour l'exécution optimum de l'opération courante.

Lors de traitements cryptographiques, une conversion de masquage selon l'invention est généralement accompagnée d'une conversion réciproque, également selon les enseignements de l'invention, après qu'une opération ait été appliquée sur la base du masquage converti.

L'invention s'applique particulièrement bien au chiffrement AES pour fournir une conversion de masquage additif en masquage multiplicatif avant d'appliquer l'opération MIT et pour fournir une conversion réciproque (multiplicatif vers additif) après cette opération et avant d'appliquer les autres opérations du chiffrement qui sont affines.

D'autres particularités et avantages de l'invention apparaîtront encore dans la description ci-après, illustrée par les dessins ci-joints, dans lesquels :

- la **figure 1** représente schématiquement les éléments principaux d'une forme de réalisation possible pour une carte à microcircuit ;
- la **figure 2** représente l'allure physique générale de la carte à microcircuit de la **figure 1 ;**
- la **figure 3** illustre schématiquement l'algorithme AES pour la mise en oeuvre du procédé selon l'invention ;
- la **figure 4** illustre schématiquement le contexte de conversion de masquage ou de séparation selon l'invention ;
- la **figure 5** représente, sous forme de logigramme, un premier mode de mise en oeuvre d'une conversion de séparation additive d'une donnée secrète en une séparation multiplicative, selon l'invention;
- la **figure 6** illustre ce premier mode de mise en oeuvre;
- la **figure 7** illustre un deuxième mode de mise en oeuvre d'une conversion de séparation additive en une séparation multiplicative, selon l'invention;
- la **figure 8** illustre un troisième mode de mise en oeuvre d'une conversion de séparation additive en une séparation multiplicative, selon l'invention;
- la **figure 9** illustre un quatrième mode de mise en oeuvre d'une conversion de séparation additive en une séparation multiplicative, selon l'invention;
- la **figure 10** illustre un cinquième mode de mise en oeuvre d'une conversion de séparation additive en une séparation multiplicative, selon l'invention;
- la **figure 11** illustre un sixième mode de mise en oeuvre d'une conversion de séparation additive en une séparation multiplicative, selon l'invention;
- la **figure 12** représente, sous forme de logigramme, un premier mode de mise en oeuvre d'une conversion de séparation multiplicative d'une donnée secrète en une séparation additive, selon l'invention;
- la **figure 13** illustre ce premier mode de mise en oeuvre; et
- la **figure 14** illustre un deuxième mode de mise en oeuvre d'une conversion de séparation multiplicative en une séparation additive, selon l'invention.

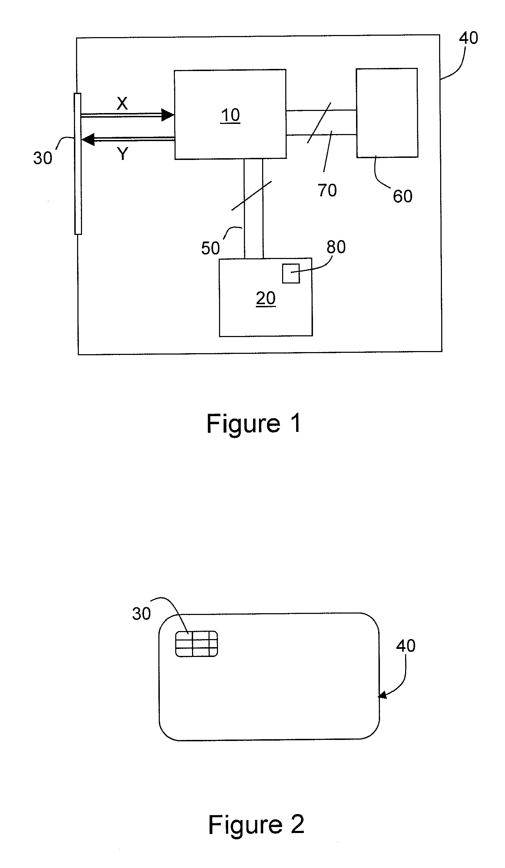

La **figure 1** représente schématiquement un dispositif de traitement de données 40 dans lequel la présente invention est mise en oeuvre. Ce dispositif 40 comprend un microprocesseur 10, auquel est associée d'une part une mémoire vive 60, par exemple au moyen d'un bus 70, et d'autre part une mémoire non volatile 20 (par exemple du type EEPROM), par exemple à travers un bus 50.

Le dispositif de traitement de données 40, et précisément le microprocesseur 10 qu'il incorpore, peuvent échanger des données avec des dispositifs extérieurs au moyen d'une interface de communication 30.

On a schématiquement représenté sur la **figure 1** la transmission d'une donnée d'entrée X reçue d'un dispositif extérieur (non représenté) et transmise de l'interface de communication 30 au microprocesseur 10. De manière similaire, on a représenté la transmission d'une donnée de sortie Y du microprocesseur 10 vers l'interface de communication 30 à destination d'un dispositif extérieur. Cette donnée de sortie Y est issue d'un traitement de données par le microprocesseur 10, généralement sur la donnée d'entrée X à l'aide d'une donnée secrète 80 interne au système, par exemple une clé privée.

Bien que, pour l'illustration, les données d'entrée et les données de sortie figurent sur deux flèches différentes, les moyens physiques qui permettent la communication entre le microprocesseur 10 et l'interface 30 pourront être réalisés par des moyens uniques, par exemple un port de communication série ou un bus.

Le microprocesseur 10 est apte à exécuter un logiciel (ou programme d'ordinateur) qui permet au dispositif de traitement de données 40 d'exécuter un procédé conforme à l'invention dont des exemples sont donnés dans la suite. Le logiciel est composé d'une série d'instructions de commande du microprocesseur 10 qui sont par exemple stockées dans la mémoire 20.

En variante, l'ensemble microprocesseur 10 - mémoire non-volatile 20 - mémoire vive 60 peut être remplacé par un circuit à application spécifique qui comprend alors des moyens de mise en oeuvre des différentes étapes du procédé de traitement de données.

La **figure 2** représente une carte à microcircuit qui constitue un exemple de dispositif de traitement de données conforme à l'invention tel que représenté à la **figure 1**. L'interface de communication 30 est dans ce cas réalisée au moyen des contacts de la carte à microcircuit. La carte à microcircuit incorpore un microprocesseur 10, une mémoire vive 60 et une mémoire non volatile 20 comme cela est représenté sur la **figure 1.**

Cette carte à microcircuit est par exemple conforme à la norme ISO 7816 et munie d'un microcontrôleur sécurisé qui regroupe le microprocesseur (ou CPU) 20 et la mémoire vive 60.

En variante, le dispositif de traitement de données peut être une clef USB, un document ou un support d'informations papier comportant dans l'une de ses feuilles un microcircuit associé à des moyens de communication sans contact. Il s'agit de manière préférée d'une entité électronique portable ou de poche.

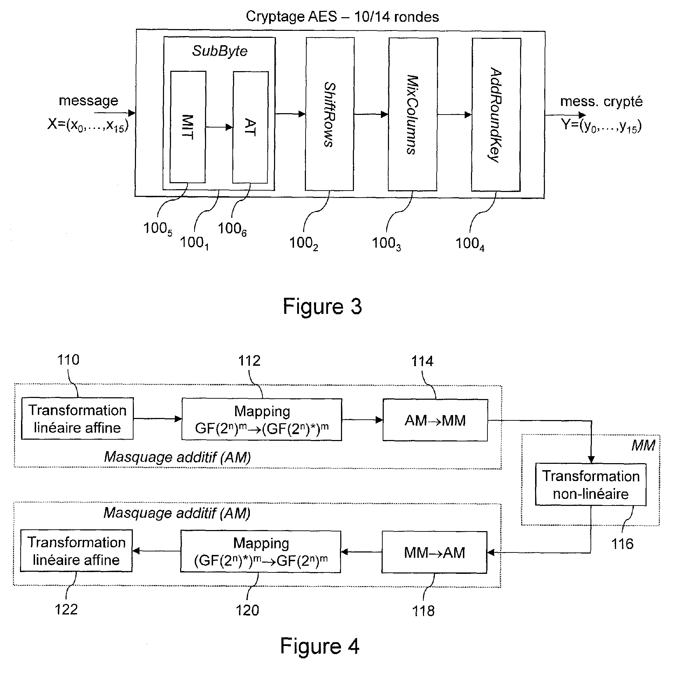

En référence aux **figures 3** à **14,** on décrit maintenant des exemples de procédés selon l'invention appliqués à un traitement cryptographique symétrique de type AES, au cours duquel le microprocesseur 10 souhaite crypter un message X en un message crypté Y.

La **figure 3** illustre schématiquement l'algorithme AES qui prend en entrée un bloc de 16 octets du message à traiter: $X = (x_i)_{i=0...15} \in GF(2^8)^{16}$.

Le chiffrement AES exécute une séquence de rondes, généralement 10, 12 ou 14, comprenant les transformations individuelles représentées sur la figure. AES est un algorithme de chiffrement symétrique, qui prend, en entrée, un message X, sous forme d'un bloc de 128 bits (16 octets), et une clé de 128, 192 ou 256 bits.

Les quatre étapes principales d'une ronde sont l'opération non linéaire (selon l'addition bit à bit) *SubByte* $100_1$ de substitution de chaque octet $x_i$ à l'aide d'une boîte *S-Box,* puis les opérations linéaires *ShiftRows* $100_2$ de transposition cyclique, *MixColumns* $100_3$ de produit matriciel et *AddRoundKey* $100_4$ de combinaison de chaque octet avec une clé de ronde.

Ces opérations sont répétées plusieurs fois et définissent une "ronde". Pour une clé de 128, 192 ou 256 bits, AES nécessite respectivement 10, 12 ou 14 rondes.

Les opérations *SubByte* et *ShiftRows* peuvent toutefois être inversées, par rapport à l'ordre de la figure, sans impacter l'algorithme.

Ces différentes étapes sont définies dans la norme AES et ne seront par conséquent pas décrites en détail au-delà de ce qui intéresse la présente invention. Chaque étape est vue comme une transformation individuelle de l'algorithme, avec en outre l'étape *SubByte* qui peut être décomposée en deux autres transformations individuelles: une transformation, non linéaire, inverse multiplicative $100_5$ notée MIT (*Multiplicative Inverse Transformation*) et une transformation, linéaire, affine $100_6$ notée AT (*Affine Transformation*). Ainsi, S-Box($x_i$) = AT o MIT($x_i$).

Considérons l'ensemble $((GF(2^n))^m, +, *)$ où la loi additive + (ci-après "addition") est une addition bit à bit, c'est-à-dire $X+Y=(x_0+y_0, x_1+y_1, ..., x_m+y_m)$, et la loi multiplicative * (ci-après "multiplication") est une multiplication composante $(x_i)$ par composante, c'est-à-dire $X*Y=(x_0*y_0, X_1*Y_1, ..., x_m*y_m)$. n est le nombre de bits par mot (généralement un octet) et m le nombre de mots dans le message (16 dans l'exemple ci-dessus).

Un exemple de loi additive est l'opération XOR (ou exclusif). Pour la suite des explications, l'addition '+' fait référence à cette opération XOR.

La transformation MIT de AES correspond à une transformation puissance définie par rapport à cette loi multiplicative composante à composante.

Les transformations affines de AES sont des transformations dont la partie linéaire est compatible avec l'addition bit à bit.

Comme précisé plus haut, en entrée du chiffrement AES le message X est masqué à un ordre *d* multiple (d>1): $X_0 \perp X_1^{-1} \perp ... \perp X_d^{-1} = X$, où $\perp$ est l'opération de groupe pour le masquage, à savoir l'addition bit à bit + (XOR) ou la multiplication composante à composante *. L'invention trouve une application particulièrement avantageuse lors de masquages d'ordre élevé, c'est-à-dire $d>2$.

Un tel masquage permet de séparer le message (la donnée secrète) à un ordre d en $d+1$ parties (additives ou multiplicatives selon le cas).

Par la suite, on note $X_i \in (GF(2^n))^m$ ($0 \le i \le d$) les $d+1$ parties additives de X, et $Z_i \in (GF(2^n)^*)^m$ ($0 \le i \le d$) les $d+1$ parties multiplicatives (non nulles) de X. Ainsi, les majuscules $X_i, Y, Z_i$ désignent des valeurs dans $GF(2^n)^m$ alors que les minuscules $x_i, y_i$ (ou $x^i, y^i$) désignent des composantes ou coordonnées dans $GF(2^n)$.

A l'aide de $d$ masques additifs $(X_i)_{1 \le i \le d}$, l'opération $(X, (X_i)_{1 \le i \le d}) \rightarrow X_0 = X + \sum_{1 \le i \le d} X_i$ est une opération de masquage additif d'ordre $d$ de la donnée X.

De même, l'opération $(X, (Z_i)_{1 \le i \le d}) \rightarrow Z_0 = X \star \prod_{1 \le i \le d} Z_i$ est une opération de masquage multiplicatif d'ordre $d$ de la donnée X.

Comme illustré schématiquement sur la **figure 4**, on adjoint, en entrée d'une transformation non linéaire de nature multiplicative 116 (par exemple MIT), une conversion 114 du masquage additif, noté AM (pour "additive masking") en un masquage multiplicatif, noté MM, qui est alors compatible avec cette transformation non linéaire.

De même, après avoir appliqué cette dernière, on adjoint en sortie une conversion réciproque 118 (du masquage multiplicatif MM en un masquage additif AM) afin de récupérer des données masquées additivement qui sont compatibles avec une transformation linéaire suivante 122.

Le masquage multiplicatif n'étant défini que sur $(GF(2^n)^*)^m$, l'étape 112 réalise une mise en correspondance de $(GF(2^n))^m$ dans $(GF(2^n)^*)^m$. Elle est par exemple réalisée par la transformation $X_i \rightarrow X_i + \delta(X_i)$ appliquée sur chaque partie additive de X ($0 \le i \le d$), avec $\delta$ une fonction dirac opérant composante $x_j$ ($\in GF(2^n)$) par composante.

Réciproquement, l'étape 120 réalise une mise en correspondance de $(GF(2^n)^*)^m$ dans $(GF(2^n))^m$, à l'aide des valeurs $\delta(X_i)$ sauvegardées en mémoire à l'étape 112.

Un calcul sécurisé à l'ordre d de $X+\delta(X)$ à partir des $d+1$ parties additives $X_i$ est notamment réalisé par l'algorithme suivant. Au préalable, la matrice $(X_0, X_1, ..., X_d)$ représentant les $d+1$ parties additives $X_i$ est découpée en $m/n$ sous-matrices de dimensions $n \times n$ (prenons le cas où m est un multiple de n, par exemple m=16 et n=8). L'algorithme suivant s'applique aux sous-matrices $n \times n$.

Entrée: l'ordre $d$, la dimension $n$, les $d+1$ parties additives $(X_0, X_1, ..., Xd)$ de la donnée X (de dimensions $n \times n$)

$$X_0 \leftarrow \overline{X_0}$$

```
Pour i = 0 à d
```

$$t_i \leftarrow (X_i)^T$$

$$(\Delta_0, ..., \Delta_d) \leftarrow (t_0^0, ..., t_d^0)$$

```
Pour i = 1 à n-1
```

$$(\Delta_0, ..., \Delta_d) \leftarrow (\Delta_0, ..., \Delta_d) \underset{sec}{\otimes^n} (t_0^i, ..., t_d^i)$$

$$\text{Return } (\Delta_0, ..., \Delta_d)$$

Sortie: $d+1$ parties additives $(\Delta_0, ..., \Delta_d)$ séparant le vecteur de dimension n $\Delta = \delta(X) = (\delta_0(x^0), ..., \delta_0(x^{n-1}))$.

Où X représentant le complément bit à bit de la matrice X de taille $n \times n$; $X^T$ est la transposée de la matrice X; $t_i^j$ est la $j^{ème}$ ligne de $t_i$; et $\underset{sec}{\otimes^n}$ est une multiplication bit à bit de deux vecteurs de dimension $n$ (par exemple l'opération binaire ET).

Afin de conserver la sécurisation à l'ordre $d$ de cette opération de mise en correspondance, $\underset{sec}{\otimes^n}$ est une opération multiplication sécurisée à l'ordre $d$ comme décrite dans les techniques de l'état de l'art , par exemple dans la publication "Private circuits: Securing hardware against probing attacks" (Yuval Ishai, Amit Sahai, and David Wagner;

CRYPTO, volume 2729 of Lecture Notes in Computer Science, pages 463-481. Springer, 2003).

L'invention s'intéresse en particulier aux transformations 114 et 118 qui réalisent, respectivement:

- une conversion d'une séparation additive d'ordre *d* de la donnée secrète X en *d+1* parties additives $(X_i)_{0 \leq i \leq d}$ en une séparation multiplicative d'ordre *d* en *d+1* parties multiplicatives $(Z_i)_{0 \leq i \leq d}$ de cette même donnée secrète; et
- une conversion d'une séparation multiplicative d'ordre *d* de la donnée secrète X en *d+1* parties multiplicatives $(Z_i)_{0 \leq i \leq d}$ en une séparation additive d'ordre *d* en *d+1* parties additives $(X_i)_{0 \leq i \leq d}$ de cette même donnée secrète.

On rappelle qu'à ce moment, les parties $X_i$ sont non nulles, grâce notamment à l'opération de mise en correspondance 112 $(X_i \rightarrow X_i + \delta(Xi))$. Pour la suite des explications, les parties $X_i$ sont donc des éléments non nuls.

La première conversion réalise l'opération suivante:

$$\left(X_i\right)_{0 \leq i \leq d} = \left(X + \sum_{1 \leq i \leq d} X_i, X_1, ..., X_d\right) \rightarrow \left(X \star \prod_{1 \leq i \leq d} Z_i, Z_1, ..., Z_d\right) = \left(Z_i\right)_{0 \leq i \leq d}$$

où $\sum$ représente une somme bit à bit conformément à la loi '+' introduite précédemment, et $\Pi$ représente une multiplication composante à composante conformément à la loi '*' introduite précédemment. En outre, $X_i \in (GF(2^n)^*)^m$ pour i=0 à d. On notera d'ailleurs que les parties multiplicatives $Z_i$ sont également non nulles.

La deuxième conversion réalise l'opération réciproque:

$$\left(Z_i\right)_{0 \leq i \leq d} = \left(X \star \prod_{1 \leq i \leq d} Z_i, Z_1, ..., Z_d\right) \rightarrow \left(X + \sum_{1 \leq i \leq d} X_i, X_1, ..., X_d\right) = \left(X_i\right)_{0 \leq i \leq d}.$$

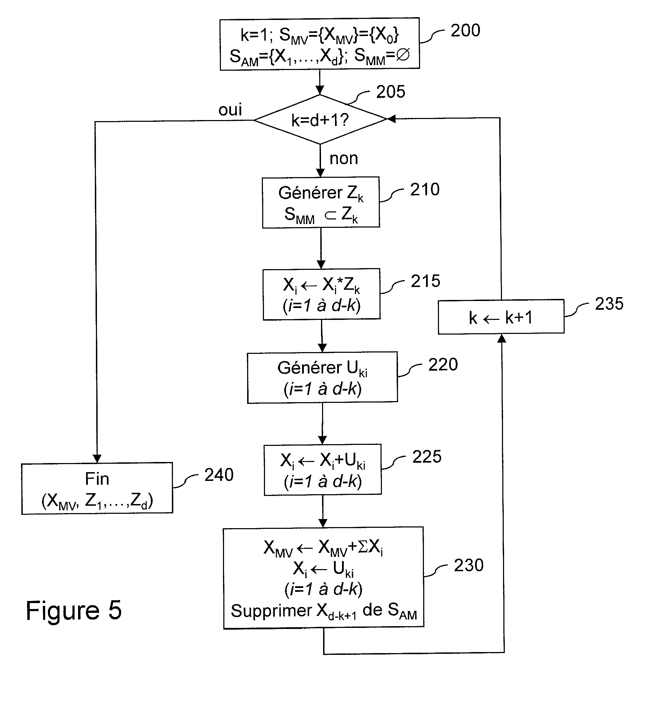

Les **figures 5** à **11** illustrent divers modes de réalisation sécurisés à l'ordre *d* de la première conversion, à savoir d'un masquage additif en un masquage multiplicatif.

En référence notamment à la **figure 5,** ces différents modes de réalisation comprennent *d* itérations permettant de générer (étape 210) aléatoirement *d* parties multiplicatives $Z_k$ (ou masques multiplicatifs) respectivement pour chaque itération k; d'appliquer successivement, lors de ces itérations, chacune des *d* parties multiplicatives générées, en multipliant (étape 215) des parties additives courantes $X_i$ de la donnée secrète X par la partie multiplicative $Z_k$ correspondant à l'itération k courante; et de sommer (étape 230) les parties additives courantes $X_i$ de la donnée secrète X résultant de la multiplication lors de l'itération *d* finale pour obtenir la *d+1ème* partie multiplicative $Z_0 = X_{MV} = X \star \prod_{1 \leq i \leq d} Z_i$.

Selon les mécanismes de l'invention permettant d'accroître l'ordre de sécurisation de cette conversion, possiblement jusqu'à l'ordre *d* recherché, il est alors prévu, lors d'au moins une dite itération k, de générer (étape 220) au moins un aléa $U_{k,i}$ et d'introduire (étape 225) ledit au moins un aléa généré dans les parties additives courantes $X_i$ résultant de la multiplication 215 de cette itération k, de sorte à obtenir des parties additives aléatoires constituant les parties additives courantes pour une itération suivante k+1.

Dans un premier mode de réalisation de la conversion AM vers MM décrit en référence à la **figure 5,** on initialise des variables à l'étape 200 comme suit:

- l'indice k des itérations est défini à 1;
- un ensemble noté $S_{MV}$ muni d'une unique première valeur $X_{MV}$ comprend une $(X_0)$ des *d+1* parties additives séparant la donnée secrète (masquée additivement). La partie additive ainsi choisie peut être vue comme étant la donnée secrète masquée (MV) dont on souhaite convertir le masquage additif en masquage multiplicatif;
- un premier ensemble $S_{AM}$ comprenant les *d* autres parties additives $(X_i, 1 \leq i \leq d)$; et
- un second ensemble $S_{MM}$ initialement vide et destiné à stocker les parties multiplicatives générées $Z_i$ (i.e. les masques multiplicatifs) au fur et à mesure des itérations.

Dans ce mode de réalisation, ces trois ensembles sont itérativement modifiés de telle sorte qu'à la fin des itérations $S_{AM}$ soit vide, $S_{MM}$ contienne *d* parties multiplicatives $Z_i$ générées, et $S_{MV}$ comprenne la *d+1ème* partie multi-

plicative $Z_0 = X \star \prod_{1 \le i \le d} Z_i$ . On note $X_{MV}$ l'élément de $S_{MV}$, $X_i^{(k)}$ les éléments de $S_{AM}$ pour l'itération k et $Z_i$ les éléments de $S_{MM}$.

Les éléments des ensembles $S_{MV}$ et $S_{AM}$ qui évoluent au cours des itérations sont dénommés par la suite "parties additives courantes" afin de refléter cette évolution compte tenu d'une itération courante correspondante. Selon des modes de réalisation de l'invention, à chaque itération k, ces parties additives courantes constituent une séparation à l'ordre k de la donnée X progressivement masquée multiplicativement, à savoir:

$$ X_{MV} = \left( X \star \prod_{1 \le j \le k} Z_j \right) + \sum X_i^{(k)} . $$

Les étapes 205 et 235 permettent de réaliser les *d* itérations selon l'invention, où l'étape 235 incrémente la valeur k et l'étape 205 la compare à *d+1*. Lorsque k atteint *d+1,* les parties multiplicatives $Z_i$ ($0 \le i \le d$) obtenues comme décrit ci-après sont alors transmises comme résultat de la conversion (étape 240).

Chaque itération k comprend les sous-étapes suivantes:

- étape 210: générer aléatoirement une partie multiplicative $Z_k$ et l'ajouter à l'ensemble $S_{MM}$;
- étape 215: multiplier la valeur $X_{MV}$ de $S_{MV}$ et chaque élément ou partie additive courante $X_i^{(k)}$ du premier ensemble $S_{AM}$ par cette partie multiplicative générée $Z_k$;
- étape 220: générer *d*-k aléas dans $(GF(2^n)^*)^m$, notés $U_{k,i}$ (i=1 à *d*-k);
- étape 225: ajouter, à *d*-k éléments $X_i^{(k)}$ du premier ensemble $S_{AM}$, ces *d*-k aléas respectifs $U_{k,i}$, au sens de l'opération '+';
- étape 230: déterminer les nouvelles parties additives courantes $X_i^{(k+1)}$ pour l'itération suivante k+1, cette détermination comprenant:

   ○ sommer les parties additives courantes $X_i^{(k)}$ du premier ensemble $S_{AM}$ ainsi obtenu avec ladite première valeur $X_{MV}$ de l'ensemble $S_{MV}$, de sorte à obtenir une dite première valeur $X_{MV}$ de l'ensemble $S_{MV}$ pour l'itération suivante k+1; et
   ○ mémoriser les *d*-k aléas $U_{k,i}$ obtenus à l'étape 225 comme les éléments $X_i^{(k+1)}$ du premier ensemble $S_{AM}$ pour l'itération suivante k+1 (car pour l'opération additive XOR considérée ici l'inverse d'un aléa $U_{k,i}$ est égal à cet aléa).

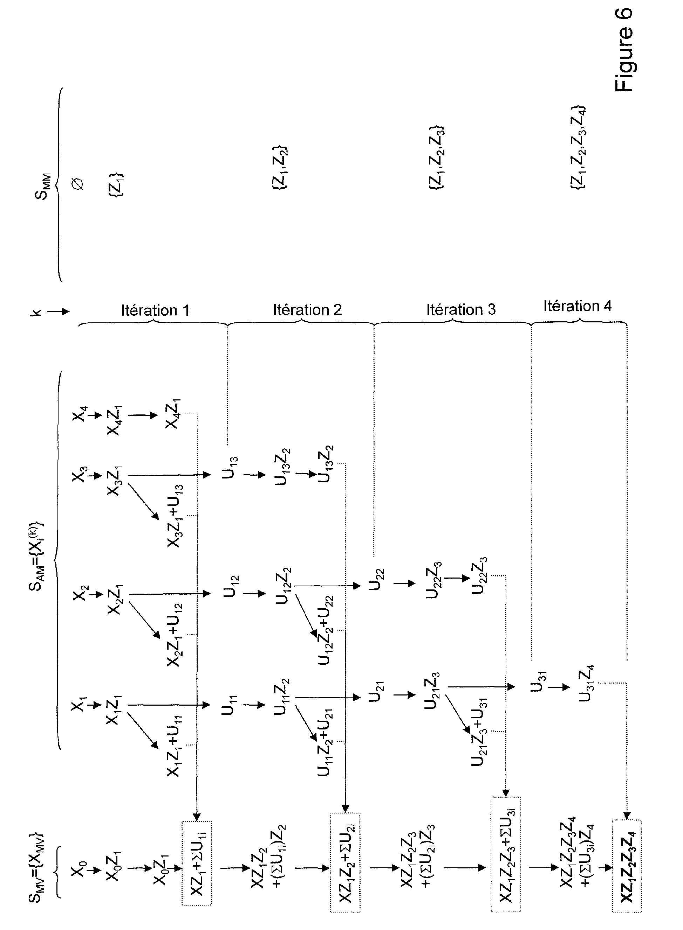

On observe ainsi qu'à chaque itération l'ensemble $S_{AM}$ perd un élément au profit de l'ensemble $S_{MM}$. En effet, à l'étape 330, seuls les *d*-k $U_{k,i}$ sont mémorisés dans $S_{AM}$, $X_{d-k+1}$ étant par conséquent supprimé. Cela reflète l'idée de substituer un masque additif par un nouveau masque multiplicatif.
Lors de l'itération *d*, aucun aléa $U_{d,i}$ n'est généré (les étapes 220 et 225 ne sont pas réalisées). Ainsi, l'étape 230 consiste alors à sommer les parties additives $X_i^{(d)}$ courantes de la donnée secrète X résultant de la multiplication lors de l'itération d finale pour obtenir la *d+1$^{éme}$* partie multiplicative $Z_0 = X_{MV} = X \star \prod_{1 \le i \le d} Z_i$ . Les autres parties multiplicatives $Z_i$ sont mémorisées dans l'ensemble $S_{MM}$ alors obtenu.
La succession de ces étapes permet de garantir une sécurisation à l'ordre *d* de la donnée secrète X, et ce à chaque opération élémentaire effectuée lors des *d* itérations.
Ce mode de réalisation peut être mis en oeuvre à l'aide de l'algorithme suivant, dont une exécution (dans le cas *d*=4) est illustrée par la **figure 6.**
Entrée: *d+1* parties additives ($X_0$, $X_1$, ..., $X_d$) de la donnée X

```
Z_0 ← X_0
Pour k = 1 à d
        Z_k ← rand(((GF(2^n)*)^m)
        Z_0 ← Z_0 * Z_k
        Pour j = 1 à d-k
                U_{k,j} ← rand(GF(2^n)^m)
                X_j ← Z_k * X_j
                X_j ← X_j + U_{k,j}
                Z_0 ← Z_0 + X_j
                X_j ← U_{k,j}
        X_{d-k+1} ← Z_k * X_{d-k+1}
        Z_0 ← Z_0 + X_{d-k+1}
Return (Z_0, Z_1, …, Z_d)
```

Sortie: *d+1* parties multiplicatives ($Z_0$, $Z_1$, ..., $Z_d$) séparant la donnée X.

Puisque $U_{k,j}$ est utilisé uniquement dans la boucle 'j', on pourra utiliser une seule variable U pour l'ensemble des boucles itératives sur j.

Comme il ressort clairement de la **figure 6,** à chaque itération k après la multiplication par $Z_k$ des parties additives courantes $X_{MV}$ et $X_i^{(k)}$, on génère *d-k* nouveaux aléas $U_{k,j}$ (j=1 à *d*-k), soit le nombre de parties additives courantes ($X_{MV}$ et les $X_i$ de $S_{AM}$) moins 2. Ces aléas sont combinés additivement aux *d-k* premières données $X_i$ de $S_{AM}$, avant que l'ensemble des $X_i$ de $S_{AM}$ soit combiné additivement à la valeur $X_{MV}$ de $S_{MV}$ (sur la figure, les cadres en pointillés représentent les résultats des combinaisons additives).

En d'autres termes, ces *d-k* premières données $X_i$ de $S_{AM}$ sont séparées additivement (ou masquées additivement) en deux sous-parties additives à l'aide de *d-k* aléas $U_{k,j}$, puis l'on combine additivement les sous-parties correspondant à ces premières données masquées (et non aux masques $U_{k,j}$ introduits dans cet exemple) avec les autres parties additives courantes afin de former $X_{MV}$.

Ainsi, les *d-k* aléas $U_{k,j}$ générés forment l'ensemble $S_{AM}$ pour l'itération suivante, réduisant de 1 le nombre d'éléments dans $S_{AM}$ à chaque itération.

En outre, cette configuration permet de faire disparaître à l'itération k+1, les aléas introduits à l'itération k.

On observe que les parties additives courantes ($X_{MV}$ et les $X_i$) en fin d'itération k réalisent une séparation additive de $X * \prod_{1 \le i \le k} Z_i$ .

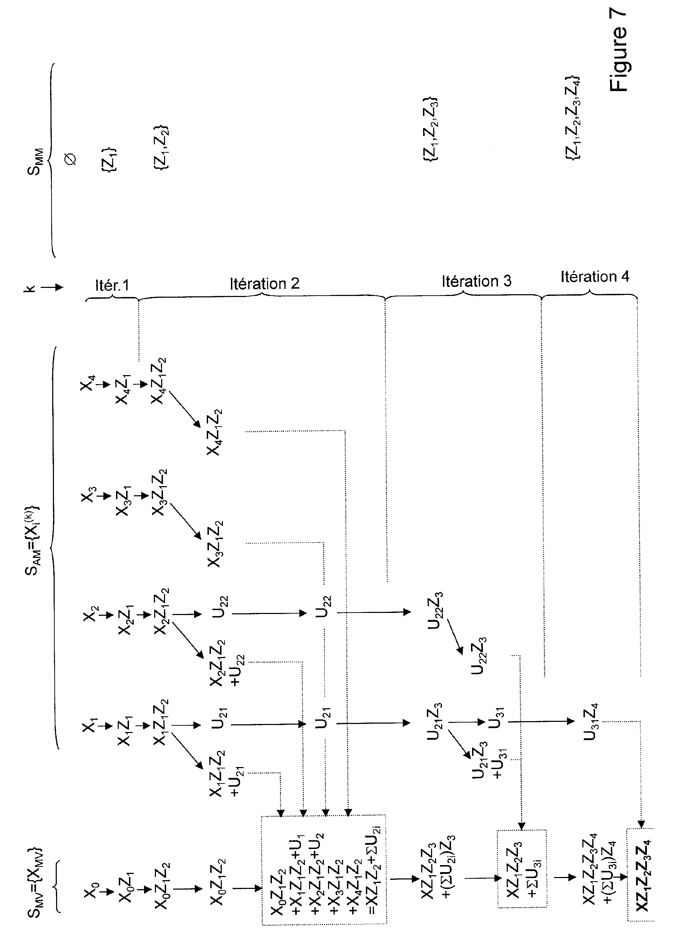

La **figure 7** illustre un mode de réalisation optimisé, toujours dans le cas *d*=4. Dans celui-ci les aléas $U_{k,j}$ ne sont générés et introduits qu'à compter de la deuxième itération. En effet, l'application successive de deux parties multiplicatives générées $Z_1$ et $Z_2$ ne réduit pas l'ordre de sécurisation car, à ce stade, toute information susceptible de permettre l'accès à la donnée secrète X ne peut être déduite à l'aide de moins d'information qu'elle n'en contient elle-même: c'est le cas de $Z_1 * Z_2$ qui ne peut être déduit qu'à partir de deux informations manipulées.

De ce fait, la combinaison 230 des parties additives n'est pas réalisée lors de cette première itération. De plus, lors de la deuxième itération, on passe de *d+1* parties additives courantes à *d-1* parties additives courantes pour l'itération suivante.

Le reste du traitement de conversion est similaire à celui exposé précédemment en lien avec les **figures 5** et **6.**

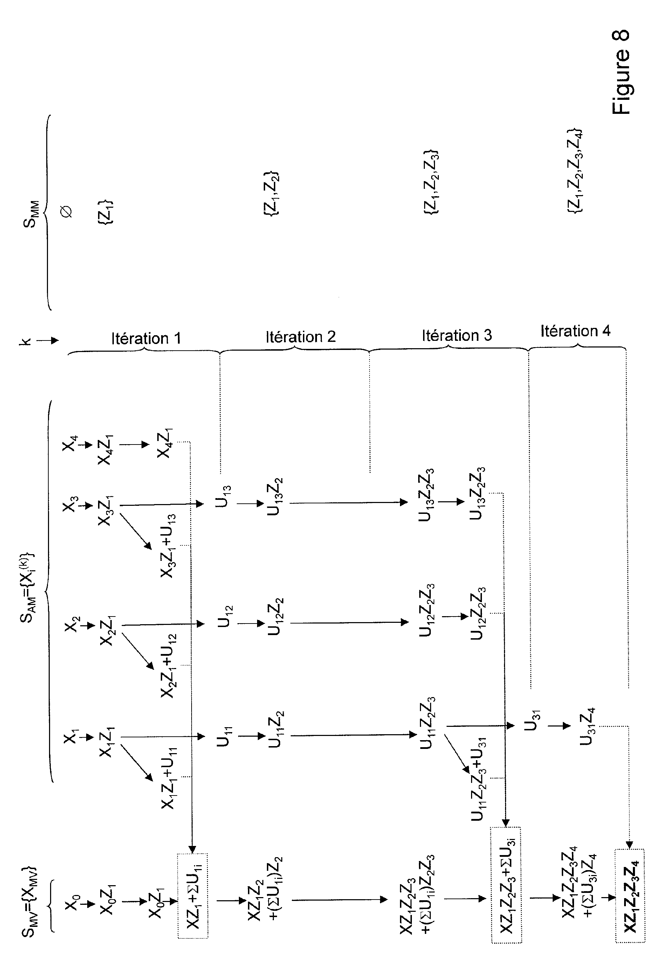

La **figure 8** montre un autre mode de réalisation adapté de la **figure 6,** toujours dans le cas *d*=4. Bien entendu, une même adaptation peut être menée sur le traitement de la **figure 7.**

Les mécanismes de conversion mis en oeuvre dans la **figure 8** prévoient l'alternance d'itérations introduisant les aléas $U_{k,j}$ et d'itérations n'introduisant aucun aléa. Dans l'exemple, les itérations impaires (sauf la dernière si *d* est impair) comprennent la génération et l'introduction d'aléas dans les parties additives courantes séparant la donnée secrète X masquée multiplicativement.

Le reste du traitement de conversion est similaire à celui exposé précédemment en référence à la **figure 6.**

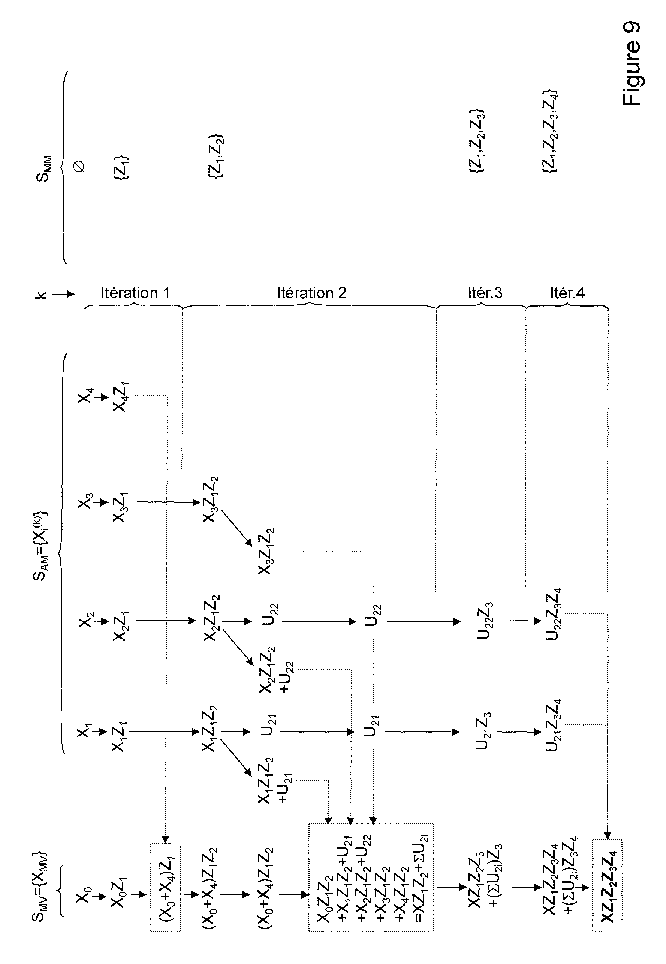

Dans une adaptation de la **figure 7,** les itérations paires (sauf la dernière le cas échéant) comprendraient la génération et l'introduction d'aléas (voir la **figure 9** reprenant notamment cette configuration).

Afin de diminuer l'ordre de protection de la donnée secrète à raison d'une diminution de l'ordre de protection d'un sous-produit de parties multiplicatives, il est prévu que deux itérations impliquant la génération et l'introduction d'aléas ne peuvent être séparées que par au plus une itération n'introduisant aucun nouvel aléa.

La **figure 9** montre une adaptation du mode de réalisation de la **figure 7,** toujours dans le cas $d$=4, mettant en oeuvre également l'adaptation présentée en lien avec la **figure 8.**

Selon cette adaptation, deux parties additives sont combinées entre elles lors de la première itération malgré l'absence d'introduction d'aléa. Cette adaptation n'entraîne aucune perte de sécurisation à l'ordre $d$ puisque $(X_1+X_4)Z_1$ ne dévoile aucune information sensible ($X_1+X_4$ en l'espèce) à l'aide de moins de données qu'elle ne contient elle-même.

Comme on l'observe sur la figure, cela permet de réduire le nombre de parties additives courantes pour l'itération suivante, et donc de réduire l'espace mémoire utilisé.

Le reste du traitement de conversion est similaire à celui exposé précédemment en référence à la **figure 7.**

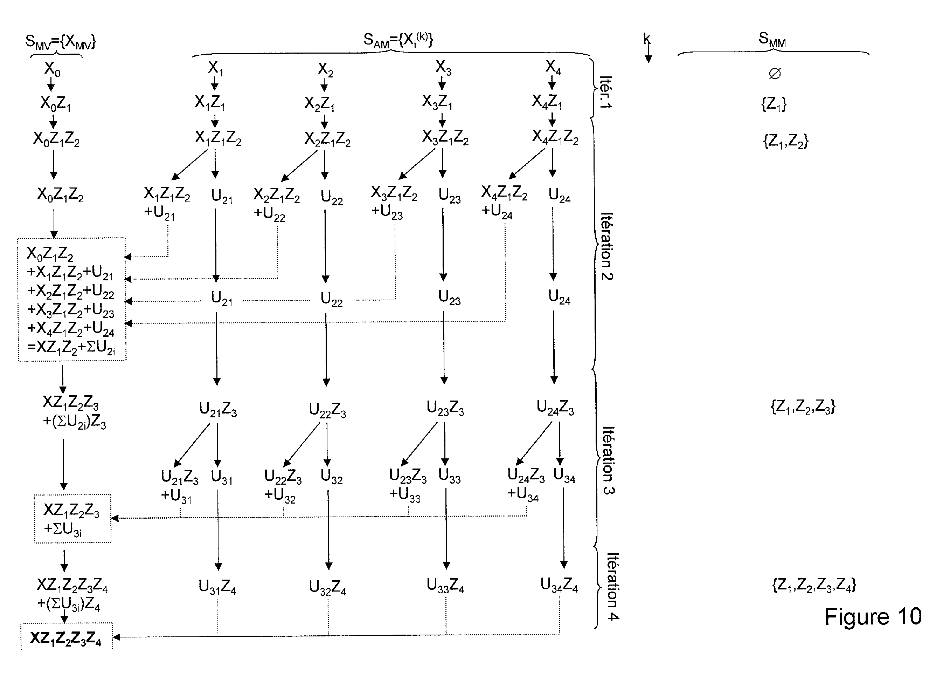

La **figure 10** illustre un autre mode de réalisation (toujours dans le cas $d$=4) dans lequel $d$ aléas sont générés à chaque itération. Cela correspond à prévoir, dans l'algorithme explicité précédemment, que la boucle sur j est exécutée pour j allant de 1 à $d$, quelque soit l'itération k.

Dans ce cas, on maintient en permanence $d+1$ parties additives courantes à chaque itération ($X_{MV}$ et $d$ éléments dans $S_{AM}$), permettant d'adopter un traitement systématique et identique sur chacun des $d$ éléments de $S_{AM}$.

Bien entendu les adaptations décrites ci-dessus peuvent également s'appliquer au présent mode de réalisation: à savoir introduire des aléas dès la première itération **(figure 6)** et prévoir une alternance d'itérations avec et sans introduction d'aléas **(figure 8).**

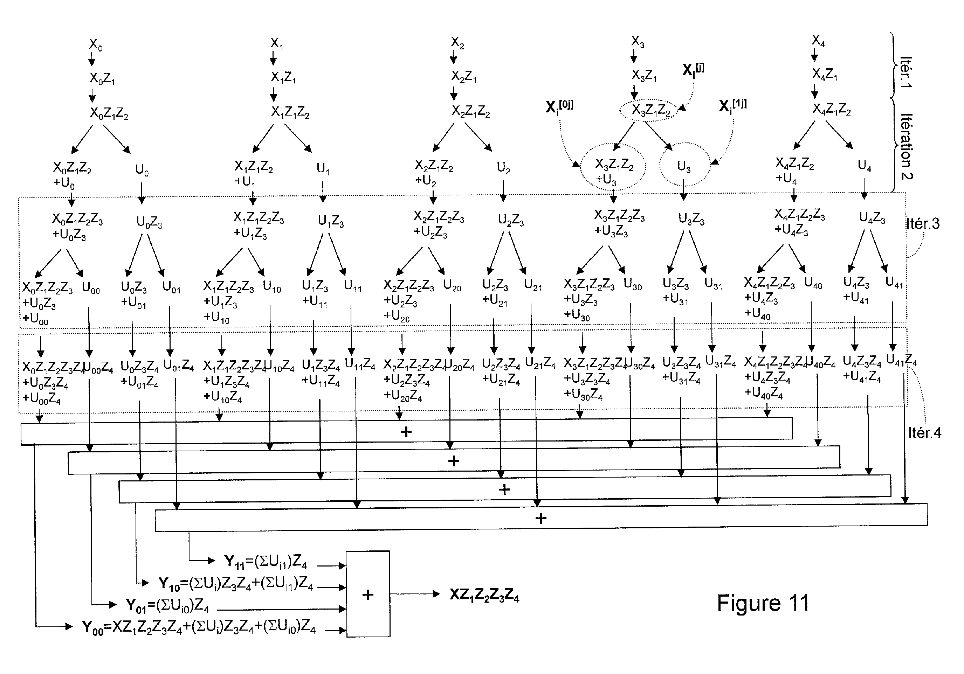

La **figure 11** présente un autre mode de réalisation (toujours dans le cas $d$=4), moins optimisé, mais systématique sur l'ensemble des parties additives $X_i$ séparant initialement la donnée X.

L'approche adoptée ici est de séparer, lors de chaque itération à l'exception de la dernière (itération $d$) et éventuellement de la première itération comme exposé précédemment en lien avec la **figure 7,** chaque partie additive courante $X_{k,i}$ résultant de la multiplication de l'itération en cours en au moins deux (ici exactement deux) parties additives courantes pour l'itération suivante, à l'aide d'un aléa $U_{k,i}$ généré propre pour chaque partie additive courante.

L'algorithme appliqué à chaque partie additive initiale $X_i$ est le suivant, avec [ab] représentant la concaténation de a avec b:

Entrée: $d+1$ parties additives ($X_0$, $X_1$, ..., $X_d$) de la donnée X

$$Z_1 \leftarrow \mathrm{rand}(((GF(2^n)*)^m)$$
$$X_i \leftarrow X_i * Z_k$$
$$(X_i^{[0]}, X_i^{[1]}) \leftarrow \mathrm{Split}(X_i)$$
Pour k = 2 à $d$
$$Z_k \leftarrow \mathrm{rand}(((GF(2^n)*)^m)$$
Pour tous les j $\in \{0,1\}^k$
$$X_i^{[j]} \leftarrow X_i^{[j]} * Z_k$$
Si k != d
$$(X_i^{[0j]}, X_i^{[1j]}) \leftarrow \mathrm{Split}(X_i^{[j]})$$
Pour tous les j $\in \{0,1\}^{d-2}$
$$Y_j = \sum_{0 \le i \le d} X_i^{[j]}$$
$$\mathrm{Return}\ (\sum_{j \in \{0;1\}^{d-2}} Y_j, Z_1, ..., Z_d)$$

Sortie: $d+1$ parties multiplicatives ($Z_0$, $Z_1$, ..., Zd) séparant la donnée X.

La fonction split réalise une séparation additive de la donnée passée en paramètre, en deux sous-parties additives. Dans l'exemple proposé sur la **figure 11,** cette fonction comprend la génération d'un aléa $U_{k,i}$ et les deux sous-parties additives résultantes sont, d'une part cet aléa généré, et d'autre part, le résultat de la combinaison additive de la donnée passée en paramètre avec cet aléa.

Bien entendu, d'autres schémas de séparation additive peuvent être mis en oeuvre.

On observe que les parties additives courantes en fin d'itération k réalisent toujours une séparation additive de $X * \prod_{1 \leq i \leq k} Z_i$. En outre, les parties additives courantes $x_i^{[j]}$ ($j \in \{0,1\}^{d-2}$) obtenues en fin de traitement définissent une séparation additive de $X_i * \prod_{1 \leq j \leq d} Z_j$, c'est-à-dire de la partie additive initiale $X_i$ masquée multiplicativement par les $Z_j$.

Les parties multiplicatives $Z_j$ générées au fur et à mesure des itérations sont mémorisées car elles constituent d parties multiplicatives retournées en fin de traitement.

A noter que si les explications ci-dessus sont fournies dans le cas notamment d'une loi additive XOR, il est clair que de façon générale lorsqu'un aléa est ajouté à une partie additive courante, c'est l'inverse de son aléa (lequel vaut ledit aléa pour XOR) qui est mémorisé en tant que nouvelle partie additive courante.

A titre illustratif, dans le cas de la **figure 10,** la prise en compte de l'inverse des aléas conduit à obtenir, en fin de l'itération 2, les cinq parties additives suivantes:

- $XZ_1Z_2 + \Sigma U_{2i}$;
- $U_{21}^{-1}$;
- $U_{22}^{-1}$;
- $U_{23}^{-1}$; et
- $U_{24}^{-1}$.

De même, à l'itération 2, la première partie additive courante $X_{MV}$ prendrait la valeur $XZ_1Z_2Z_3 + \Sigma U_{2i} Z_3 + \Sigma U_{2i}^{-1} Z_3 + \Sigma U_{3i} = XZ_1Z_2Z_3 + \Sigma U_{3i}$.

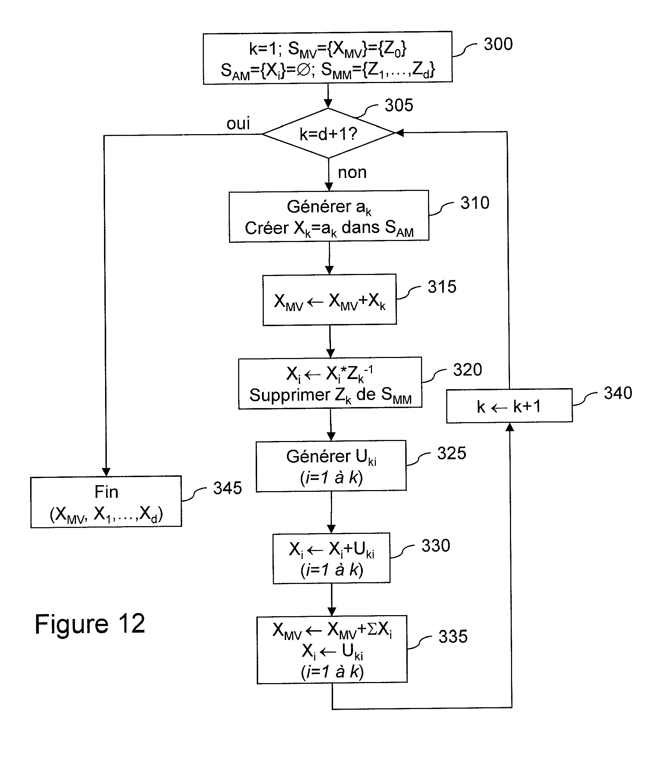

Les **figures 12** à **14** illustrent divers modes de réalisation sécurisés à l'ordre d de la deuxième conversion, à savoir d'un masquage multiplicatif (séparation multiplicative d'ordre d de la donnée secrète X en d+1 parties multiplicatives) en un masquage additif du même ordre.

En référence notamment à la **figure 12,** ces différents modes de réalisation comprennent d itérations permettant de générer (étape 310) d valeurs aléatoires, notées $a_i$, respectivement pour chaque itération k; de les ajouter (étape 315) successivement à une première partie multiplicative $Z_0$ (qui devient $X_{MV}$ lors des itérations) de la donnée secrète, lors de ces itérations; d'appliquer successivement, lors de ces itérations, chacune des d autres parties multiplicatives $Z_k$ de la donnée secrète, en multipliant (étape 320) des parties additives courantes $X_i$, comprenant initialement ladite première partie multiplicative $Z_0$, par la partie multiplicative $Z_k$ correspondant à l'itération courante k; et d'obtenir (étape 330) lesdites d+1 parties additives $X_i$ de la donnée secrète X, à partir des parties additives courantes résultant de la multiplication lors de l'itération finale d.

Selon les mécanismes de l'invention permettant d'accroître l'ordre de sécurisation de cette conversion, possiblement jusqu'à l'ordre d recherché, il est alors prévu, lors d'au moins une dite itération k, de générer (étape 325) au moins un aléa $U_{k,i}$ et d'introduire ledit au moins un aléa généré dans les parties additives courantes $X_i$ résultant de la multiplication de cette itération k, de sorte à obtenir des parties additives aléatoires courantes pour une itération suivante k+1.

Dans un premier mode de réalisation de la conversion MM vers AM décrit en référence à la **figure 12,** on initialise des variables à l'étape 300 comme suit:

- l'indice k des itérations est défini à 1;
- un ensemble noté $S_{MV}$ muni d'une unique première valeur $X_{MV}$ comprend une ($Z_0$) des d+1 parties multiplicatives séparant la donnée secrète (masquée multiplicativement). La partie multiplicative ainsi choisie peut être vue comme étant la donnée secrète masquée (MV) dont on souhaite convertir le masquage multiplicatif en masquage additif;
- un premier ensemble $S_{AM}$ initialement vide et destiné à stocker les parties additives $X_i$ en fin de conversion; et
- un second ensemble $S_{MM}$ comprenant les d autres parties multiplicatives $Z_i$ ($1 \leq i \leq d$) séparant initialement la donnée secrète X.

De façon similaire à la conversion d'une séparation additive en une séparation multiplicative décrite précédemment, ces ensembles sont itérativement modifiés de telle sorte qu'à la fin des itérations $S_{MM}$ soit vide, $S_{AM}$ contienne d parties additives $X_i$, et $S_{MV}$ comprenne la d+1$^{ème}$ partie additive $X_0 = X + \sum_{1 \leq i \leq d} X_i$.

De même, les éléments des ensembles $S_{MV}$ et $S_{AM}$ qui évoluent au cours des itérations sont également dénommés "parties additives courantes" afin de refléter cette évolution compte tenu d'une itération courante correspondante. A chaque itération k, ces parties additives courantes constituent une séparation à l'ordre k de la donnée X progressivement démasquée multiplicativement, à savoir:

$$X_{MV} = \left( Z_0 \star \prod_{1 \le j \le k} Z_j^{-1} \right) + \sum X_i^{(k)} = \left( X \star \prod_{k+1 \le j \le d} Z_j \right) + \sum X_i^{(k)}.$$

On parle ici de parties multiplicatives $Z_i$ ($1 \le i \le d$), lesquelles correspondent par analogie sensiblement aux *d* masques multiplicatifs appliqués à la donnée secrète X, par exemple lors de l'étape 114 précitée (la première conversion AM vers MM). Selon la notation adoptée, le démasquage fait intervenir directement ces parties multiplicatives $Z_i$ ou leur inverse.

Lorsque les deux conversions se succèdent, il est préférable de fournir, en entrée de la deuxième conversion (MM vers AM), les inverses $Z_i^{-1}$, afin d'éviter leur calcul dans l'algorithme décrit ici.

Pour la suite des explications, on considère que ces inverses sont fournis en entrée. On les dénomme toutefois "parties multiplicatives" sans préciser la nature d'inverse, afin de simplifier ces explications.

On notera toutefois que sur les figures à l'appui de ces explications **(figures 12, 13** et **14),** la notation $Z_i^{-1}$ est reprise afin de permettre une comparaison directe avec les **figures 5** à **11** illustrant la conversion réciproque AM vers MM.

En adoptant la même notation que pour cette conversion AM vers MM, les étapes 305 et 340 permettent de réaliser les *d* itérations selon l'invention, où l'étape 340 incrémente la valeur k et l'étape 305 la compare à *d+1*. Lorsque k atteint *d+1*, les parties additives $X_i$ ($0 \le i \le d$) obtenues comme décrit ci-après sont alors transmises comme résultat de la conversion (étape 345).

Chaque itération k comprend les sous-étapes suivantes:

- étape 310: générer une valeur aléatoire $a_k$ et l'ajouter comme élément $X_k^{(k)}$ de l'ensemble $S_{AM}$;
- étape 315: ajouter la valeur aléatoire $a_k$ à ladite première valeur $X_{MV}$;
- étape 320: multiplier ladite première valeur $X_{MV}$ et chaque élément $X_i^{(k)}$ du premier ensemble $S_{AM}$ par la partie multiplicative $Z_k$ du deuxième ensemble $S_{MM}$; et supprimer, de cet ensemble $S_{MM}$, cette partie multiplicative $Z_k$ utilisée;
- étape 325: générer k aléas dans $(GF(2^n))^m$, notés $U_{k,i}$ (i=1 à k);
- étape 330: ajouter, à chaque élément $X_i^{(k)}$ du premier ensemble $S_{AM}$, l'aléa $U_{k,i}$ respectif;
- étape 335: déterminer les nouvelles parties additives courantes $X_i^{(k+1)}$ pour l'itération suivante k+1, cette détermination comprenant:

  ○ sommer les parties additives courantes $X_i^{(k)}$ du premier ensemble $S_{AM}$ ainsi obtenu avec ladite première valeur $X_{MV}$ de l'ensemble $S_{MV}$, de sorte à obtenir une dite première valeur $X_{MV}$ de l'ensemble $S_{MV}$ pour l'itération suivante k+1;
  ○ mémoriser les k aléas $U_{k,i}$ obtenus à l'étape 325 comme les éléments $X_i^{(k+1)}$ du premier ensemble $S_{AM}$ pour l'itération suivante k+1 (car pour l'opération additive XOR considérée ici l'inverse d'un aléa $U_{k,i}$ est égal à cet aléa)..

On observe qu'à chaque itération une nouvelle valeur aléatoire est introduite comme nouvelle partie additive $X_i$. De ce fait, le nombre de parties additives séparant la donnée secrète en cours de démasquage multiplicatif croît progressivement, afin notamment de compenser ce démasquage itératif.

La succession de ces étapes permet de garantir une sécurisation à l'ordre *d* de la donnée secrète X, et ce à chaque opération élémentaire lors des *d* itérations.

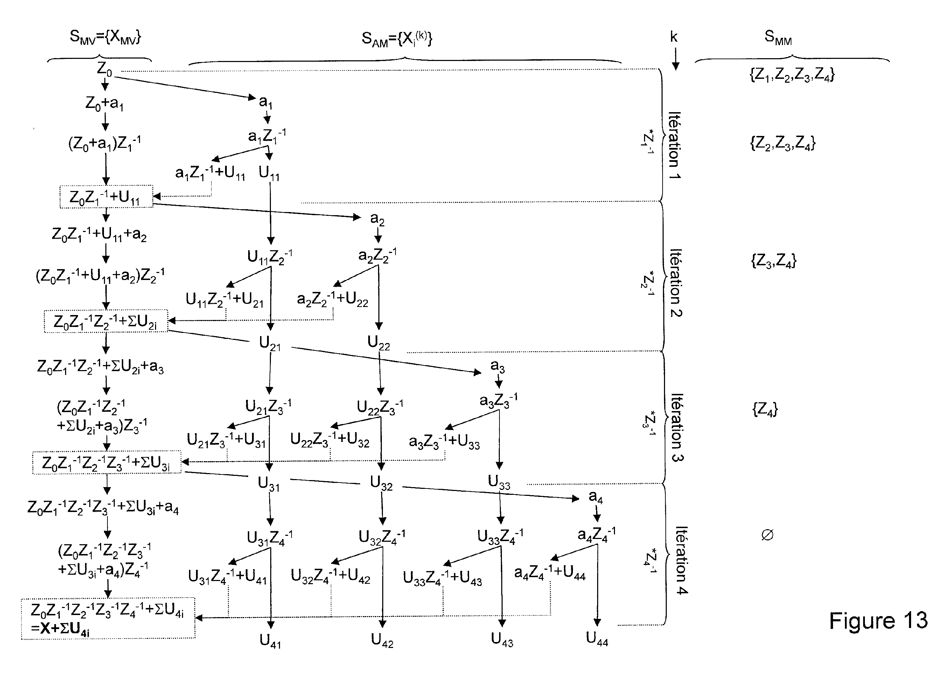

Ce mode de réalisation peut être mis en oeuvre à l'aide de l'algorithme suivant, dont une exécution (dans le cas *d*=4) est illustrée par la **figure 13.** Dans cet algorithme, on conserve ici la notation $Z_i^{-1}$ pour correspondre à la figure.

Entrée: *d+1* parties multiplicatives ($Z_0$, $Z_1$, ..., $Z_d$) de la donnée X, où $Z_0 = X + \prod_{1 \le i \le d} Z_i$.

17

$$X_0 \leftarrow Z_0$$

```
Pour k = 1 à d
        X_k ← a_k=rand(GF(2^n)^m)
        X_0 ← X_0 + X_k
        X_0 ← X_0 * Z_{k-1}
        Pour j = 1 à k
            X_j ← X_j * Z_k^{-1}
            U_{k,j} ← rand(GF(2^n)^m)
            X_j ← X_j + U_{k,j}
            X_0 ← X_0 + X_j


            X_j ← U_{k,j}
Return (X_0, X_1, …, X_d)
```

Sortie: d+1 parties additives (X0, X1, ..., Xd) séparant la donnée X.

Puisque $U_{k,j}$ est utilisé uniquement dans la boucle 'j', on pourra utiliser une seule variable U pour l'ensemble des boucles itératives sur j.

De façon similaire à la première conversion, à chaque itération k, les k parties additives X de $S_{AM}$ sont séparées additivement (ou masquées additivement) en deux sous-parties additives à l'aide de k aléas $U_{k,i}$, puis l'on combine additivement les sous-parties correspondant à ces parties additives séparées (et non aux masques $U_{k,i}$ introduits dans cet exemple) avec la partie additive $X_{MV}$ afin de former $X_{MV}$ pour l'itération suivante (voir les cadres en pointillés).

Dans le cas de la figure, les parties additives finales, c'est-à-dire séparant additivement la donnée secrète X, sont les aléas $U_{d,i}$ générés lors de la dernière itération $d$, ainsi que la valeur $X_{MV}$ qui résulte des sommes à toutes les itérations et vaut, au final, $X+\Sigma U_{d,i}$.

Certaines adaptations prévues *supra* pour la première conversion peuvent également s'appliquer à la deuxième conversion, notamment l'introduction des aléas $U_{k,j}$ une itération sur deux (les itérations impaires). En effet, l'aléa $a_k$ également introduit permet d'assurer, notamment lors de l'itération 2, la présence d'un suffisamment grand nombre de masques (additifs et multiplicatifs) garantissant une sécurisation à l'ordre $d$.

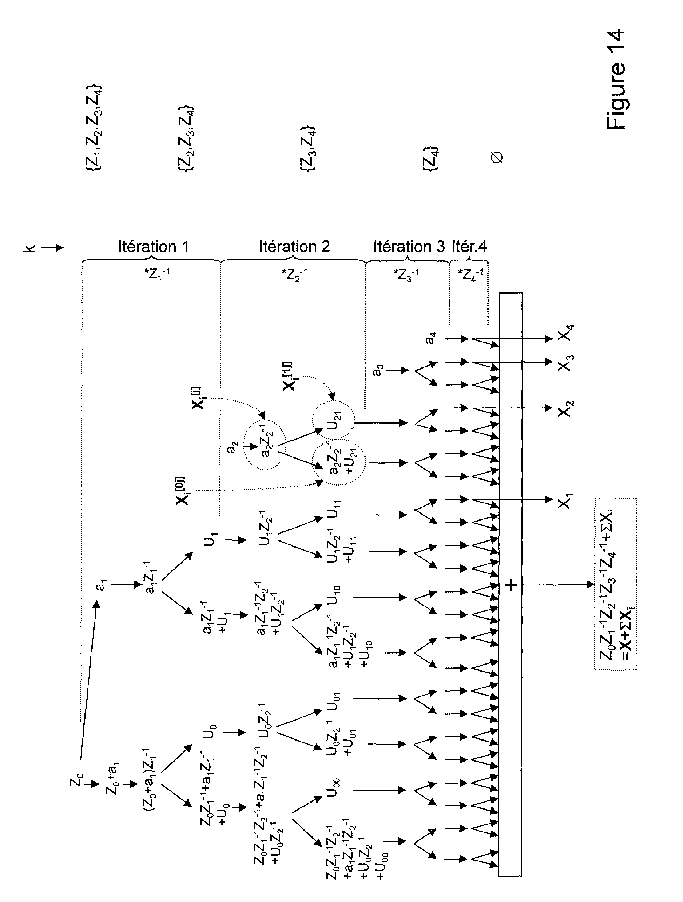

La **figure 14** illustre un autre mode de réalisation de cette deuxième conversion MM vers AM, basé sur une approche similaire à celle de la **figure 11**: la séparation itérative des parties additives courantes $X_i^{[j]}$ (dont les aléas $a_k$ font partie dès l'introduction de ceux-ci) en utilisant la fonction split évoquée *supra,* pour obtenir deux (voire plus) sous-parties additives $X_i^{[0j]}$ et $X_i^{[1j]}$. La **figure 14** illustre ce mode de réalisation toujours dans le cas $d=4$.

Etant donné le grand nombre de parties additives alors obtenues, une combinaison de celles-ci s'avère nécessaire aux fins d'obtenir uniquement $d+1$ parties additives $X_i$. Dans l'exemple proposé, on conserve une seule partie additive dérivant de chacun des aléas $a_k$ introduits, puis on combine additivement l'ensemble des autres parties additives pour obtenir la $d+1^{ème}$ partie additive attendue.

Bien entendu, d'autres variantes peuvent être envisagées, comme par exemple la combinaison de l'ensemble des parties additives dérivant de chaque aléa $a_k$ (on obtient $d$ parties additives) et la combinaison de l'ensemble des parties additives dérivant de la partie multiplicative $Z_0$ initiale sur laquelle les opérations ont eu lieu (les 16 parties additives à gauche sur la figure).

On aura compris de ce qui précède que les deux conversions évoquées permettent de conserver une sécurisation à un ordre $d$ dans le calcul d'une donnée secrète masquée à cet ordre.

Ces conversions se réalisent entre une séparation additive d'ordre $d$ de la donnée secrète X en $d+1$ parties additives $(X_i)$ en une séparation multiplicative d'ordre $d$ de cette même donnée secrète en $d+1$ parties multiplicatives $(Z_i)$,

Les opérations de démasquage lors de ces conversions comprennent une étape consistant à appliquer successivement, lors de $d$ itérations correspondantes, $d$ parties multiplicatives soit générées aléatoirement, soit connues en entrée, en multipliant des parties additives courantes de la donnée secrète par la partie multiplicative correspondant à l'itération courante. Cette étape permet de modifier le masquage multiplicatif.

En outre, ces conversions selon l'invention comprennent, lors d'au moins une dite itération, la génération d'au moins un aléa $(U_i)$ et l'introduction dudit au moins un aléa généré dans les parties additives courantes résultant de la multiplication lors de cette itération, de sorte à obtenir des parties additives aléatoires constituant les parties additives courantes pour une itération suivante.

Outre la conservation de la sécurisation à l'ordre $d$ des calculs de conversion de masques, les deux algorithmes présentés ci-dessus en lien avec les **figures 6** et **14** présentent des complexités assez faibles conférant à un chiffrement AES des performances de bon niveau.

Ces deux algorithmes présentent respectivement les complexités suivantes:

- conversion AM vers MM: $md^2$ additions bit à bit (XOR) et $md(3+d)/2$ multiplications composante à composante; et
- conversion MM vers AM: $md(2+d)$ additions bit à bit (XOR) et $md(3+d)/2$ multiplications composante à composante.

Le tableau ci-dessous compare les performances, en terme de cycles processeurs et de mémoire utilisée, entre différentes techniques de mise en oeuvre de le chiffrement AES selon l'état de l'art et un chiffrement AES mettant en oeuvre les conversions selon l'invention, pour différents ordre de masquage. Les messages encodés par AES sont, pour ces mesures, des messages de 16 octets.

Tableau 1 - Performances pour un chiffrement AES

| Méthode | Nombre de cycles ($10^3$) | RAM consommée (octets) |
|---|---|---|
| **Mise en oeuvre sans masquage** | | |
| | 2 | 32 |
| **Mise en oeuvre avec un masquage du premier ordre (d=1)** | | |
| Recalcul | 10 | 256 |
| *"Tower Field in GF($2^2$)"* | 77 | 42 |
| Masquage multiplicatif | 22 | 256 |
| Exponentiation sécurisée avec d=1 | 73 | 24 |
| Invention avec d=1 | 25 | 50 |
| **Mise en oeuvre avec un masquage du second ordre (d=2)** | | |
| Double recalculs | 594 | 512+28 |
| Simple recalcul | 672 | 256+22 |
| Exponentiation sécurisée avec d=2 | 189 | 48 |
| Invention avec d=2 | 69 | 86 |
| **Mise en oeuvre avec un masquage du troisième ordre (d=3)** | | |
| Exponentiation sécurisée avec d=3 | 326 | 72 |
| Invention avec d=3 | 180 | 128 |

La méthode "Recalcul" pour $d$=1 est notamment décrite dans la publication *"Securing the AES Finalists against Power Analysis Attacks"* (T.S. Messerges, 2000).

La méthode "Tower Field in GF(22)" est décrite dans la publication de Elisabeth Oswald, Stefan Mangard et Norbert Pramstaller, intitulée "Secure and Efficient Masking of AES - A Mission Impossible ?" (Cryptology ePrint Archive, Report 2004/134, 2004).

La méthode "Masquage multiplicatif' est décrite dans la publication précitée de Laurie Genelle, Emmanuel Prouff, and Michaël Quisquater.

La méthode "Exponentiation sécurisée" est décrite dans la publication précitée de Matthieu Rivain and Emmanuel Prouff *"Provably secure higher-order masking of AES"*.

La méthode "Double recalculs" est décrite dans la publication de Kai Schramm et Christof Paar, intitulée "Higher Order Masking of the AES".

La méthode "Simple recalcul" est décrite dans la publication de Matthieu Rivain, Emmanuelle Dottax et Emmanuel *Prouff*, intitulée "Block Ciphers Implementations Provably Secure Against Second Order Side Channel Analysis*".*

Pour des ordres $d$ supérieurs à 3, seule la méthode "Exponentiation sécurisée" fournit une alternative à la solution de la présente invention.

La consommation supérieure de mémoire par l'invention résulte principalement du fait qu'un plus grand nombre de parties additives ou multiplicatives est mis en oeuvre. Toutefois, la consommation (inférieure à 256 octets) reste raisonnable au regard des ressources mémoire disponible dans les équipements classiques, et notamment des modules électroniques tels que des cartes à microprocesseur.

Les performances en temps de traitement sont, en revanche, nettement améliorées, tenant au fait que la modification de MIT dans l'Exponentiation sécurisée implique un nombre beaucoup plus important de multiplications (plus consommatrices).

Les exemples qui précèdent ne sont que des modes de réalisation de l'invention qui ne s'y limite pas. Notamment, bien que les **figures 6** à **11, 13** et **14** montrent le cas particulier d'un ordre de masquage $d$ égal à 4, l'homme du métier comprendra de celles-ci et des explications ci-dessus comment procéder dans le cas d'ordres de masquage différents.

## Revendications

1. Procédé de traitement cryptographique de données secrètes (X), **caractérisé en ce qu'**il comporte une étape de conversion (114) d'une séparation additive d'ordre $d$ de la donnée secrète (X) en $d+1$ parties additives (X;) en une séparation multiplicative d'ordre $d$ de cette même donnée secrète en $d+1$ parties multiplicatives (Z;), ladite étape de conversion comprenant les étapes suivantes:

   - générer (210) aléatoirement d parties multiplicatives (Zi);
   - appliquer successivement, lors de d itérations correspondantes, chacune des d parties multiplicatives générées (Zi), en multipliant (215) des parties additives courantes (Xi, Xi(k)) de la donnée secrète (X) par la partie multiplicative (Zk) correspondant à l'itération courante (k); et
   - sommer (230) les parties additives courantes de la donnée secrète résultant de la multiplication lors de l'itération finale pour obtenir une d+1ème partie multiplicative (Zo);

   procédé **caractérisé en ce que** l'étape de conversion (114) comprend en outre,
   lors d'au moins une dite itération (k), la génération (220) d'au moins un aléa (U;, Uki) et l'introduction (225, 230) dudit au moins un aléa généré dans les parties additives courantes (X" Xi(k)) résultant de la multiplication (215) lors de cette itération (k), de sorte à obtenir des parties additives aléatoires constituant les parties additives courantes (Xi, Xi(k+1)) pour une itération suivante (k+1).

2. Procédé selon la revendication 1, dans lequel, lors d'une kème itération, on génère (220) un nombre d'aléas différents (U;, Uki) égal à d-k.

3. Procédé selon la revendication 2, dans lequel, lors de l'au moins une dite itération (k), on additionne (225) chaque aléa généré (Ui, Uki) à une partie additive courante respective (Xi, Xi(k)) résultant de la multiplication (215) lors de cette itération; et les parties additives courantes (X;, Xi(k+1)) pour l'itération suivante (k+1) sont composées de l'ensemble des inverses des aléas générés (Ui, Uki) lors de ladite itération et de la somme (230) des parties additives résultant de la multiplication le cas échéant modifiées par un dit aléa généré.

4. Procédé selon l'une des revendications 1 à 3, dans lequel l'au moins un aléa n'est généré et introduit qu'à partir de la deuxième itération.

5. Procédé selon l'une des revendications 1 à 4, dans lequel, initialement, on sélectionne (200) une première valeur (Xo, XMV, SMV) parmi l'ensemble des parties additives (X;) séparant la donnée secrète (X) et on définit un premier ensemble ($S_{AM}$) constitué des autres parties additives ($X_i$) séparant la donnée secrète (X) et un deuxième ensemble vide ($S_{MM}$) pour mémoriser les parties multiplicatives ($Z_i$), et chaque itération k comprend les sous-étapes suivantes:

   - sélectionner et ajouter (210), au deuxième ensemble ($S_{MM}$), une desdites parties multiplicatives ($Z_k$) générées non encore utilisée;
   - multiplier (215) ladite première valeur ($X_{MV}$) et chaque élément ($X_i^{(k)}$) du premier ensemble ($S_{AM}$) par ladite partie multiplicative sélectionnée ($Z_k$);
   - ajouter (225), à $d$-k éléments ($X_i^{(k)}$) du premier ensemble ($S_{AM}$), $d$-k aléas respectifs ($U_i$, $U_{k,j}$);
   - sommer (230) les éléments ($X_i^{(k)}$) du premier ensemble ($S_{AM}$) ainsi obtenu avec ladite première valeur ($X_{MV}$), de sorte à obtenir une dite première valeur pour l'itération suivante (k+1); et
   - mémoriser (230) les inverses des $d$-k aléas ajoutés pour former un dit premier ensemble ($S_{AM}$) pour l'itération suivante.

**6.** Procédé selon l'une des revendications 1 à 5, dans lequel les $d$ parties multiplicatives ($Z_i$) sont générées, chacune, lors de l'itération au cours de laquelle cette partie multiplicative est multipliée aux parties additives courantes ($X_i$, $X_i^{(k)}$).

**7.** Procédé de traitement cryptographique de données secrètes, **caractérisé en ce qu'**il comporte une étape de conversion (118) d'une séparation multiplicative d'ordre $d$ de la donnée secrète (X) en $d$+1 parties multiplicatives ($Z_i$) en une séparation additive d'ordre $d$ de cette même donnée secrète (X) en $d$+1 parties additives ($X_i$), ladite étape de conversion comprenant les étapes suivantes:

- générer (310) $d$ valeurs aléatoires ($a_i$) et les ajouter (315) successivement à une première partie multiplicative ($Z_0$, $X_{MV}$) de la donnée secrète, lors de $d$ itérations correspondantes;
- appliquer (320) successivement, lors de ces $d$ itérations, chacune des $d$ autres parties multiplicatives ($Z_i$) de la donnée secrète (X), en multipliant des parties additives courantes ($X_i$, $x_i^{(k)}$), comprenant initialement ladite première partie multiplicative ($Z_0$), par la partie multiplicative ($Z_k$) correspondant à l'itération courante (k); et
- obtenir (345) lesdites $d$+1 parties additives ($X_i$) de la donnée secrète (X), à partir des parties additives courantes ($X_i$, $X_i^{(k)}$) résultant de la multiplication (320) lors de l'itération finale;

procédé **caractérisé en ce que** l'étape de conversion (118) comprend en outre, lors d'au moins une dite itération (k), la génération (325) d'au moins un aléa (Ui, Uki) et l'introduction (330, 335) dudit au moins un aléa généré (Ui, Uki) dans les parties additives courantes (Xi, Xi(k)) résultant de la multiplication (315) lors de cette itération, de sorte à obtenir des parties additives aléatoires courantes ($X_i$, $X_i$(k+1)) pour une itération suivante (k+1).

**8.** Procédé selon la revendication 7, dans lequel la conversion (118) comprend, lors de chaque itération, l'introduction (310) de l'inverse d'une desdites valeurs aléatoires générées comme nouvelle partie additive courante (Xk, Xk(k)) avant la multiplication (315) de l'itération.

**9.** Procédé selon la revendication 7 ou 8, dans lequel les d valeurs aléatoires (a;) sont générées, chacune, lors de l'itération (k) au cours de laquelle l'inverse de cette valeur aléatoire (ak) est introduit (310) comme nouvelle partie additive courante ($X_k$, Xk (k)).

**10.** Procédé selon l'une des revendications 7 à 9, dans lequel, lors d'une kème itération, on génère (325) un nombre d'aléas différents (U;, Uk;) égal à k.

**11.** Procédé selon l'une des revendications 7 à 10, dans lequel lors de l'au moins une dite itération (k), on additionne (330) chaque aléa généré à une partie additive courante (Xi, Xi(k)) respective résultant de la multiplication (320) lors de cette itération; et les parties additives courantes (Xi, Xi(k+1)) pour l'itération suivante (k+1) sont composées de l'ensemble des inverses des aléas générés (U;, Uki) lors de ladite itération (k) et de la somme des parties additives résultant de la multiplication le cas échéant modifiées par un dit aléa généré.

**12.** Procédé selon l'une des revendications 7 à 11, dans lequel toutes les itérations sauf la dernière comprennent la génération et l'introduction d'au moins un nouvel aléa.

**13.** Procédé selon l'une des revendications 7 à 11, dans lequel, initialement, on sélectionne (300) une première valeur (Zo, XMV, SMV) parmi l'ensemble des parties multiplicatives (Zi) séparant la donnée secrète (X) et on définit un premier ensemble vide (SAM) pour mémoriser des parties additives (X;) et un deuxième ensemble (SMM) constitué des autres parties multiplicatives (Z;) séparant la donnée secrète, et chaque itération (k) comprend les sous-étapes suivantes:

- sélectionner et ajouter (310), au premier ensemble (SAM), une (ak) desdites d valeurs aléatoires générées non encore utilisée;
- ajouter (315) la valeur aléatoire sélectionnée (ak) à ladite première valeur (XMV);
- multiplier (320) ladite première valeur (XMV) et chaque élément (Xi, Xi(k)) du premier ensemble (SAM) par une partie multiplicative (Zk) non encore utilisée et sélectionnée dans le deuxième ensemble (SMM);
- ajouter (330), à chaque élément (Xi, Xi(k)) du premier ensemble (SAM), un aléa respectif (U;, Uki);
- sommer (335) les éléments (Xi, Xi(k)) du premier ensemble ainsi obtenu avec ladite première valeur (Xmv), de sorte à obtenir une dite première valeur (XMV) pour l'itération suivante (k+1);
- mémoriser (335) les inverses des aléas ajoutés (U;, Uki) pour former un dit premier ensemble (SAM) pour l'itération suivante.

**14.** Dispositif de traitement cryptographique de données secrètes, **caractérisé en ce qu'**il comporte un module de conversion d'une séparation additive d'ordre d de la donnée secrète (X) en d+1 parties additives (Xi) en une séparation multiplicative d'ordre d de cette même donnée secrète en d+1 parties multiplicatives (Zi), le module de conversion comprenant:

- un générateur aléatoire de d parties multiplicatives (Zi);
- un moyen de traitement configuré pour appliquer successivement, lors de d itérations correspondantes, chacune des d parties multiplicatives générées, en multipliant des parties additives courantes (Xi, Xi(k)) de la donnée secrète par la partie multiplicative correspondant à l'itération courante; et
- un additionneur des parties additives de la donnée secrète résultant de la multiplication lors de l'itération finale pour obtenir une d+1ème partie multiplicative (Zo);

dispositif **caractérisé en ce que** le moyen de traitement du module de conversion comprend en outre, un générateur d'aléa configuré pour générer au moins un aléa (Ui, Uki) lors d'au moins une dite itération (k) et est configuré pour introduire, lors de l'au moins une dite itération, ledit au moins un aléa généré dans les parties additives courantes (Xi, Xi(k)) résultant de la multiplication lors de cette itération, de sorte à obtenir des parties additives aléatoires constituant les parties additives courantes (Xi, Xi(k+1)) pour une itération suivante (k+1).

**15.** Dispositif de traitement cryptographique de données secrètes, **caractérisé en ce qu'**il comporte un module de conversion d'une séparation multiplicative d'ordre d de la donnée secrète (X) en d+1 parties multiplicatives ($Z_i$) en une séparation additive d'ordre d de cette même donnée secrète en d+1 parties additives (X;), le module de conversion comprenant:

- un générateur aléatoire de d valeurs aléatoires (ai);
- un moyen de traitement configuré pour ajouter successivement ces d valeurs aléatoires générées à une première partie multiplicative de la donnée secrète, lors de d itérations correspondantes; et pour appliquer successivement, lors de ces d itérations, chacune des d autres parties multiplicatives (Z;) de la donnée secrète, en multipliant des parties additives courantes (Xi, Xi(k), comprenant initialement ladite première partie multiplicative (Zo), par la partie multiplicative (Zk) correspondant à l'itération courante (k); et
- des moyens d'obtention pour obtenir lesdites d+1 parties additives (Xi) de la donnée secrète, à partir des parties additives courantes (X;, Xi(k)) résultant de la multiplication lors de l'itération finale;

dispositif **caractérisé en ce que** le moyen de traitement du module de conversion comprend en outre, un générateur d'aléa configuré pour générer au moins un aléa (U;, Uki) lors d'au moins une dite itération (k) et est configuré pour introduire, lors de l'au moins une dite itération, ledit au moins un aléa généré dans les parties additives courantes (Xi, Xi(k)) résultant de la multiplication lors de cette itération, de sorte à obtenir des parties additives aléatoires (Xi, Xi(k+1)) pour une itération suivante (k+1).

**Patentansprüche**

**1.** Verfahren zur kryptographischen Verarbeitung von geheimen Daten (X), **dadurch gekennzeichnet, dass** es einen Schritt des Umwandeins (114) einer additiven Trennung der Ordnung d der geheimen Daten (X) in d+1 additive Teile (Xi) in einer multiplikativen Trennung der Ordnung d der gleichen geheimen Daten in d+1 multiplikative Teile (Zi) umfasst, wobei der Schritt des Umwandelns die folgenden Schritte umfasst:

- zufälliges Generieren (210) von d multiplikativen Teilen (Zi);
- sukzessives Anwenden bei entsprechenden d Iterationen von jedem der d generierten multiplikativen Teile (Zi) durch Multiplizieren (215) der aktuellen additiven Teile (Xi, Xi(k)) der geheimen Daten (X) mit dem multiplikativen Teil (Zk), der der aktuellen Iteration (k) entspricht; und
- Summieren (230) der aktuellen additiven Teile der geheimen Daten, die sich aus der Multiplikation bei der letzten Iteration ergeben, um einen d+1-ten multiplikativen Teil (Zo) zu erhalten; Verfahren, **dadurch gekennzeichnet, dass** der Schritt des Umwandeins (114) zudem bei mindestens einer Iteration (k) das Generieren (220) von mindestens einem Zufallswert (Ui, Uki) und das Einführen (225, 230) dieses mindestens einen generierten Zufallswerts in die aktuellen additiven Teile (Xi, Xi(k)), die sich aus der Multiplikation (215) bei dieser Iteration (k) ergeben, um zufällige additive Teile zu erhalten, die die aktuellen additiven Teile (Xi, Xi(k+1)) für eine nächste Iteration (k+1) bilden, umfasst.

2. Verfahren nach Anspruch 1, wobei bei einer k-ten Iteration eine Anzahl von verschiedenen Zufallswerten (Ui, Uki) generiert (220) wird, die gleich d-k ist.

3. Verfahren nach Anspruch 2, wobei bei der mindestens einen Iteration (k) jeder generierte Zufallswert (Ui, Uki) zu jeweils einem aktuellen additiven Teil (Xi, Xi(k)) addiert (225) wird, der sich aus der Multiplikation (215) bei dieser Iteration ergibt; und wobei die aktuellen additiven Teile (Xi, Xi(k+1)) für die nächste Iteration (k+1) aus der Menge der Kehrwerte der generierten Zufallswerte (Ui, Uki) bei der Iteration und aus der Summe (230) der additiven Teile, die sich aus der Multiplikation ergeben, die gegebenenfalls durch einen generierten Zufallswert modifiziert sind, gebildet werden.

4. Verfahren nach einem der Ansprüche 1 bis 3, wobei der mindestens eine Zufallswert erst ab der zweiten Iteration generiert und eingeführt wird.

5. Verfahren nach einem der Ansprüche 1 bis 4, wobei zunächst ein erster Wert (Xo, XMV, SMV) aus der Menge der additiven Teile (Xi) ausgewählt (200) wird, die die geheimen Daten (X) trennen, und eine erste Menge ($S_{AM}$) definiert wird, die aus den anderen additiven Teilen ($X_i$) gebildet ist, die die geheimen Daten (X) trennen, und eine zweite leere Menge (SMM), um die multiplikativen Teile ($Z_i$) zu speichern, und jede Iteration k die folgenden Teilschritte umfasst:

   - einen der generierten multiplikativen Teile ($Z_k$), die noch nicht verwendet werden, auswählen und zu der zweiten Menge ($S_{MM}$) hinzufügen (210);
   - den ersten Wert ($X_{MV}$) und jedes Element ($X_i^{(k)}$) der ersten Menge ($S_{AM}$) mit dem ausgewählten multiplikativen Teil ($Z_k$) multiplizieren (215);
   - zu den d-k Elementen ($X_i^{(k)}$) der ersten Menge ($S_{AM}$) jeweils d-k Zufallswerte ($U_j$, $U_{k,j}$) hinzufügen (225);
   - die Elemente ($X_i^{(k)}$) der auf diese Weise erhaltenen ersten Menge ($S_{AM}$) mit dem ersten Wert ($X_{MV}$) summieren (230), um einen ersten Wert für die folgende Iteration (k+1) zu erhalten; und
   - die Kehrwerte der hinzugefügten d-k Zufallswerte speichern (230), um eine erste Menge ($S_{AM}$) für die folgende Iteration zu bilden.

6. Verfahren nach einem der Ansprüche 1 bis 5, wobei die d multiplikativen Teile ($Z_i$) jeweils bei der Iteration generiert werden, bei der dieser multiplikative Teil mit den aktuellen additiven Teilen ($X_i$, $X_i^{(k)}$) multipliziert wird.

7. Verfahren zur kryptographischen Verarbeitung von geheimen Daten, **dadurch gekennzeichnet, dass** es einen Schritt des Umwandeins (118) einer multiplikativen Trennung der Ordnung d der geheimen Daten (X) in d+1 multiplikative Teile ($Z_i$) in einer additiven Trennung der Ordnung d der gleichen geheimen Daten (X) in d+1 additive Teile ($X_i$) aufweist, wobei der Schritt des Umwandelns die folgenden Schritte umfasst:

   - d Zufallswerte ($a_i$) generieren (310) und diese nacheinander zu einem ersten multiplikativen Teil ($Z_0$, $X_{MV}$) der geheimen Daten bei d entsprechenden Iterationen hinzufügen (315);
   - nacheinander bei diesen d Iterationen jeden der d anderen multiplikativen Teile ($Z_i$) der geheimen Daten (X) anwenden (320), indem aktuelle additive Teile ($X_i$, $X_i^{(k)}$), die anfänglich den ersten multiplikativen Teil ($Z_0$) umfassen, mit dem multiplikativen Teil ($Z_k$) multipliziert werden, der der aktuellen Iteration (k) entspricht; und
   - die d+1 additiven Teile ($X_i$) der geheimen Daten (X) aus den aktuellen additiven Teilen ($X_i$, $X_i^{(k)}$) erhalten (345), die sich aus der Multiplikation (320) bei der letzten Iteration ergeben;

   Verfahren, **dadurch gekennzeichnet, dass** der Schritt des Umwandelns (118) ferner bei der mindestens einen Iteration (k) das Generieren (325) von mindestens einem Zufallswert (Ui, Uki) und das Einführen (330, 335) von dem mindestens einen generierten Zufallswert (Ui, Uki) in die aktuellen additiven Teile (Xi, Xi(k)) umfasst, die sich aus der Multiplikation (315) bei dieser Iteration ergeben, um zufällige aktuelle additive Teile (Xi, Xi(k+1)) für eine nächste Iteration (k+1) zu erhalten.

8. Verfahren nach Anspruch 7, wobei das Umwandeln (118) bei jeder Iteration das Einführen (310) des Kehrwertes eines der generierten Zufallswerte als neuen aktuellen additiven Teil (Xk, Xk(k)) vor der Multiplikation (315) der Iteration umfasst.

9. Verfahren nach einem der Ansprüche 7 oder 8, wobei die d Zufallswerte (ai) jeweils bei der Iteration (k) generiert werden, bei der der Kehrwert dieses Zufallswerts (ak) als neuer aktueller additiver Teil (Xk, Xk(k)) eingeführt (310) wird.

**10.** Verfahren nach einem der Ansprüche 7 bis 9, wobei bei einer k-ten Iteration eine Anzahl von verschiedenen Zufallswerten (Ui, Uki) generiert (325) wird, die gleich k ist.

**11.** Verfahren nach einem der Ansprüche 7 bis 10, wobei bei der mindestens einen Iteration (k) jeder generierte Zufallswert zu jeweils einem aktuellen additiven Teil (Xi, Xi(k)) addiert (330) wird, der sich aus der Multiplikation (320) bei dieser Iteration ergibt; und wobei die aktuellen additiven Teile (Xi, Xi(k+1)) für die nächste Iteration (k+1) aus der Menge der Kehrwerte der generierten Zufallswerte (Ui, Uki) bei der Iteration (k) und aus der Summe der additiven Teile, die sich aus der Multiplikation ergeben, die gegebenenfalls durch einen generierten Zufallswert modifiziert sind, gebildet werden.

**12.** Verfahren nach einem der Ansprüche 7 bis 11, wobei alle Iteration außer der letzten das Generieren und das Einführen von mindestens einem neuen Zufallswert umfassen.

**13.** Verfahren nach einem der Ansprüche 7 bis 11, wobei zunächst ein erster Wert (Zo, XMV, SMV) aus der Menge der multiplikativen Teile (Zi) ausgewählt (300) wird, die die geheimen Daten (X) trennt, und eine erste leere Menge (SAM) definiert wird, um additive Teile (Xi) zu speichern, und eine zweite Menge (SMM), die aus den anderen multiplikativen Teilen (Zi) gebildet ist, die die geheimen Daten trennen, und wobei jede Iteration (k) die folgenden Teilschritte aufweist:

 - einen (ak) der d generierten Zufallswerte, die noch nicht verwendet werden, auswählen und zu der ersten Menge (SAM) hinzufügen (310);
 - den ausgewählten Zufallswert (ak) zu dem ersten Wert (XMV) hinzufügen (315);
 - den ersten Wert (XMV) und jedes Element (Xi, Xi(k)) der ersten Menge (SAM) mit einem multiplikativen Teil (Zk) multiplizieren (320), der noch nicht verwendet wird und aus der zweiten Menge (SMM) ausgewählt ist;
 - zu jedem Element (Xi, Xi(k)) der ersten Menge (SAM) jeweils einen Zufallswert (Ui, Uki) hinzufügen (330);
 - die Elemente (Xi, Xi(k)) der auf diese Weise erhaltenen ersten Menge mit dem ersten Wert (Xmv) summieren (335), um einen ersten Wert (XMV) für die folgende Iteration (k+1) zu erhalten;
 - die Kehrwerte der hinzugefügten Zufallswerte (Ui, Uki) speichern (335), um eine erste Menge (SAM) für die folgende Iteration zu bilden.

**14.** Vorrichtung zur kryptographischen Verarbeitung von geheimen Daten, **dadurch gekennzeichnet, dass** sie ein Modul zum Umwandeln einer additiven Trennung der Ordnung d der geheimen Daten (X) in d+1 additive Teile (Xi) in einer multiplikativen Trennung der Ordnung d der gleichen geheimen Daten in d+1 multiplikative Teile (Zi) aufweist, wobei das Modul zum Umwandeln Folgendes umfasst:

 - einen Zufallsgenerator von d multiplikativen Teilen (Zi);
 - ein Mittel zur Verarbeitung, das konfiguriert ist, um nacheinander bei entsprechenden d Iterationen jeden der d generierten multiplikativen Teile durch Multiplizieren der aktuellen additiven Teile (Xi, Xi(k)) der geheimen Daten mit dem multiplikativen Teil, der der aktuellen Iteration entspricht, anzuwenden; und
 - einen Addierer der additiven Teile der geheimen Daten, die sich aus der Multiplikation bei der letzten Iteration ergeben, um einen d+1-ten multiplikativen Teil (Zo) zu erhalten;

Vorrichtung, **dadurch gekennzeichnet, dass** das Mittel zur Verarbeitung des Moduls zum Umwandeln außerdem einen Zufallsgenerator umfasst, der konfiguriert ist, um mindestens einen Zufallswert (Ui, Uki) bei mindestens einer Iteration (k) zu generieren, und konfiguriert ist, um bei der mindestens einen Iteration den mindestens einen generierten Zufallswert in die aktuellen additiven Teile (Xi, Xi(k)) einzuführen, die sich aus der Multiplikation bei dieser Iteration ergeben, um zufällige additive Teile zu erhalten, die die aktuellen additiven Teile (Xi, Xi(k+1)) für eine nächste Iteration (k+1) bilden.

**15.** Vorrichtung zur kryptographischen Verarbeitung von geheimen Daten, **dadurch gekennzeichnet, dass** sie ein Modul zum Umwandeln einer multiplikativen Trennung der Ordnung d der geheimen Daten (X) in d+1 multiplikative Teile (Zi) in einer additiven Trennung der Ordnung d der gleichen geheimen Daten in d+1 additive Teile (Xi) aufweist, wobei das Modul zum Umwandeln Folgendes umfasst:

 - einen Zufallsgenerator von d zufälligen Werten (ai) ;
 - ein Mittel zur Verarbeitung, das konfiguriert ist, um nacheinander diese d generierten zufälligen Werte zu einem ersten multiplikativen Teil der geheimen Daten bei d entsprechenden Iterationen hinzuzufügen; und um danach bei diesen d Iterationen jeden der d anderen multiplikativen Teile (Zi) der geheimen Daten anzuwenden, indem aktuelle additive Teile (Xi, Xi(k)), die anfänglich den ersten multiplikativen Teil (Zo) umfassen, mit dem multiplikativen Teil (Zk) multipliziert werden, der der aktuellen Iteration (k) entspricht; und

- Mittel zum Erhalten, um die d+1 additiven Teile (Xi) der geheimen Daten aus den aktuellen additiven Teilen (Xi, Xi(k)) zu erhalten, die sich aus der Multiplikation bei der letzten Iteration ergeben; Vorrichtung, **dadurch gekennzeichnet, dass** das Mittel zur Verarbeitung des Moduls zum Umwandeln außerdem einen Zufallsgenerator umfasst, der konfiguriert ist, um mindestens einen Zufallswert (Ui, Uki) bei mindestens einer Iteration (k) zu generieren, und konfiguriert ist, um bei der mindestens einen Iteration den mindestens einen generierten Zufallswert in die aktuellen additiven Teile (Xi, Xi(k)) einzuführen, die sich aus der Multiplikation bei dieser Iteration ergeben, um zufällige additive Teile (Xi, Xi(k+1)) für eine folgende Iteration (k+1) zu erhalten.

**Claims**

1. Method of cryptographic processing of secret data (X), **characterised in that** it includes a step (114) of converting an additive separation of order d of the secret data item (X) into d+1 additive parts (Xi) into a multiplicative separation of order d of this same secret data item into d+1 multiplicative parts (Zi), said converting step comprising the following steps:

   - randomly generating (210) d multiplicative parts (Zi) ;
   - in d corresponding iterations, applying each of the d multiplicative parts generated (Zi) in succession, by multiplying (215) the current additive parts (Xi, Xi(k)) of the secret data item (X) by the multiplicative part (Zk) corresponding to the current iteration (k); and
   - summing (230) the current additive parts of the secret data item resulting from the multiplication in the final iteration to obtain a d+1$^{th}$ multiplicative part (Z0);

   the method being **characterised in that** the converting step (114) furthermore comprises, in at least one said iteration (k), the generation (220) of at least one random item (Ui, Uki) and the introduction (225, 230) of said at least one random item generated in the current additive parts (X, Xi(k)) resulting from the multiplication (215) in this iteration (k), so as to obtain random additive parts forming the current additive parts (Xi, Xi(k+1)) for a following iteration (k+1).

2. Method according to claim 1, in which, in a k$^{th}$ iteration, a number equal to d-k of different random items (Ui, Uki) is generated (220).

3. Method according to claim 2, in which, in the at least one said iteration (k), each random item generated (Ui, Uki) is added (225) to a respective current additive part (Xi, Xi(k)) resulting from the multiplication (215) in this iteration; and the current additive parts (Xi, Xi(k+1)) for the following iteration (k+1) are composed of the set of inverses of the random items generated (Ui, Uki) in said iteration and of the sum (230) of the additive parts resulting from the multiplication, and modified where applicable by a said generated random item.

4. Method according to one of Claims 1 to 3, in which the at least one random item is generated and introduced only from the second iteration onwards.

5. Method according to one of Claims 1 to 4, in which, initially, a first value (Xo, XMV, SMV) is selected (200) among the set of additive parts (Xi) separating the secret data item (X) and a first set ($S_{AM}$) is defined composed of the other additive parts ($X_i$) separating the secret data item (X) and a second empty set ($S_{MM}$) is defined to store the multiplicative parts ($Z_i$) in the memory, and each iteration k comprises the following sub-steps:

   - selecting and adding (210), to the second set ($S_{MM}$), one of said generated multiplicative parts ($Z_k$) not yet in use;
   - multiplying (215) said first value ($X_{MV}$) and each element ($X_i^{(k)}$) of the first set ($S_{AM}$) by said selected multiplicative part ($Z_k$);
   - adding (225) $d$-k respective random items ($U_i$, $U_{k, j}$) to $d$-k elements ($X_i^{(k)}$) of the first set ($S_{AM}$);
   - summing (230) the elements ($X_i^{(k)}$) of the first set ($S_{AM}$) thus obtained with said first value ($X_{MV}$), so as to obtain a said first value for the following iteration (k+1) ; and
   - storing (230) the inverses of the $d$-k random items added in the memory to form a said first set ($S_{AM}$) for the following iteration.

6. Method according to one of Claims 1 to 5, in which the $d$ multiplicative parts ($Z_i$) are each generated in the iteration during which this multiplicative part is multiplied by the current additive parts ($X_i$, $X_i^{(k)}$).

7. Method of cryptographic processing of secret data, **characterised in that** it includes a step (118) of converting a multiplicative separation of order d of the secret data item (X) into *d+1* multiplicative parts ($Z_i$) into an additive separation of order *d* of this same secret data item (X) into *d+1* additive parts ($X_i$), said converting step comprising the following steps:

- generating (310) *d* random values ($a_i$) and adding them (315) in succession to a first multiplicative part ($Z_0$, $X_{MV}$) of the secret data item, in *d* corresponding iterations;
- applying (320) in succession, in these *d* iterations, each of the *d* other multiplicative parts ($Z_i$) of the secret data item (X), by multiplying the current additive parts ($X_i$, $X_i^{(k)}$), initially comprising said first multiplicative part ($Z_0$), by the multiplicative part ($Z_k$) corresponding to the current iteration (k); and
- obtaining (345) said *d+1* additive parts ($X_i$) of the secret data item (X), on the basis of the current additive parts ($X_i$, $X_i^{(k)}$) resulting from the multiplication (320) in the final iteration;

this method being **characterised in that** the converting step (118) furthermore comprises, in at least one said iteration (k), the generation (325) of at least one random item (Ui, Uki) and the introduction (330, 335) of said at least one generated random item (Ui, Uki) into the current additive parts (Xi, Xi(k)) resulting from the multiplication (315) in this iteration, so as to obtain current random additive parts (Xi, Xi(k+1)) for a following iteration (k+1).

8. Method according to Claim 7, in which the converting (118) comprises, in each iteration, the introduction (310) of the inverse of one of said generated random values as the new current additive part (Xk, Xk(k)) before the multiplication (315) of the iteration.

9. Method according to Claim 7 or 8, in which the d random values (ai) are each generated in the iteration (k) in which the inverse of this random value (ak) is introduced (310) as the new current additive part (Xk, Xk(k)).

10. Method according to one of Claims 7 to 9, in which, in a k$^{th}$ iteration, a number equal to k of different random items (Ui, Uki) is generated (325).

11. Method according to one of Claims 7 to 10, in which, in the at least one said iteration (k), each random item generated is added (330) to a respective current additive part (Xi, Xi(k)) resulting from the multiplication (320) in this iteration; and the current additive parts (Xi, Xi(k+1)) for the following iteration (k+1) are composed of the set of the inverses of the random items (Ui, Uki) generated in said iteration (k) and of the sum of the additive parts resulting from the multiplication, and modified where applicable by a said generated random item.

12. Method according to one of Claims 7 to 11, in which all the iterations except for the last comprise the generation and the introduction of at least one new random item.

13. Method according to one of Claims 7 to 11, in which, initially, a first value (Zo, XMV, SMV) is selected (300) among the set of the multiplicative parts (Zi) separating the secret data item (X) and a first empty set (SAM) is defined to store additive parts (Xi) in the memory and a second set (SMM) is defined composed of the other multiplicative parts (Zi) separating the secret data item, and each iteration (k) comprises the following sub-steps:

- selecting and adding (310), to the first set (SAM), one (ak) of said d generated random values not yet in use;
- adding (315) the selected random value (ak) to said first value (XMV);
- multiplying (320) said first valve (XMV) and each element (Xi, Xi(K)) of the first set (SAM) by a multiplicative part (ZK) not yet used and selected from the second set (SMM);
- adding (330) a respective random item (U;,Uki) to each element (Xi, Xi(k)) of the first set (SAM);
- summing (335) the elements (Xi, Xi(k)) of the first set thus obtained with said first value (Xmv), so as to obtain a said first value (XMV) for the following iteration (K+1);
- storing (335) the inverses of the added random items (Ui, Uki) in the memory to form a said first set (SAM) for the following iteration.

14. Device for cryptographic processing of secret data, **characterised in that** it includes a module for converting an additive separation of order d of the secret data item (X) into d+1 additive parts (Xi) into a multiplicative separation of order d of this same secret data item into d+1 multiplicative parts (Zi), the converting module comprising:

- a random generator of d multiplicative parts (Zi);
- a processing means configured to apply in succession, in d corresponding iterations, each of the d multiplicative parts generated, by multiplying the current additive parts (Xi, Xi(k)) of the secret data item by the multiplicative part corresponding to the current iteration; and
- an adder of the additive parts of the secret data item resulting from the multiplication in the final iteration to obtain a d+1$^{th}$ multiplicative part (Zo);

the device being **characterised in that** the processing means of the converting module furthermore comprises a random item generator configured to generate at least one random item (Ui, Uki) in at least one said iteration (k) and is configured to introduce, in the at least one said iteration, said at least one random item generated in the current additive parts (Xi, Xi(k)) resulting from the multiplication in this iteration, so as to obtain random additive parts forming the current additive parts (Xi, Xi(k+1)) for a following iteration (k+1).

15. Device for cryptographic processing of secret data, **characterised in that** it includes a module for converting a multiplicative separation of order d of the secret data item (X) into d+1 multiplicative parts (Zi) into an additive separation of order d of this same secret data item into d+1 additive parts (Xi), the converting module comprising:

- a random generator of d random values (ai);
- a processing means configured to add these d generated random values in succession to a first multiplicative part of the secret data item, in d corresponding iterations; and to successively apply, in these d iterations, each of the d other multiplicative parts (Zi) of the secret data item, by multiplying the current additive parts (Xi, Xi(k)), initially comprising said first multiplicative part (Zo), by the multiplicative part (Zk) corresponding to the current iteration (k); and
- obtaining means for obtaining said d+1 additive parts (Xi) of the secret data item, on the basis of the current additive parts (Xi, Xi(k)) resulting from the multiplication in the final iteration;

the device being **characterised in that** the processing means of the converting module furthermore comprises a random item generator configured to generate at least one random item (Ui, Uki) in at least one said iteration (k) and is configured to introduce, in the at least one said iteration, said at least one generated random item into the current additive parts (Xi, Xi(k)) resulting from the multiplication in this iteration, so as to obtain random additive parts (Xi, Xi(k+1)) for a following iteration (k+1).

Figure 1

Figure 2

Cryptage AES – 10/14 rondes

Figure 3

Figure 4

$$k=1; \; S_{MV}=\{X_{MV}\}=\{X_0\}$$
$$S_{AM}=\{X_1,...,X_d\}; \; S_{MM}=\varnothing$$
— 200

**205**

oui     $k=d+1?$

non

Générer $Z_k$
$S_{MM} \subset Z_k$
— 210

$X_i \leftarrow X_i*Z_k$
($i=1$ à $d\text{-}k$)
— 215

$k \leftarrow k+1$ — 235

Générer $U_{ki}$
($i=1$ à $d\text{-}k$)
— 220

Fin
$(X_{MV}, Z_1,...,Z_d)$
— 240

$X_i \leftarrow X_i+U_{ki}$
($i=1$ à $d\text{-}k$)
— 225

**Figure 5**

$$X_{MV} \leftarrow X_{MV}+\Sigma X_i$$
$$X_i \leftarrow U_{ki}$$
($i=1$ à $d\text{-}k$)
Supprimer $X_{d\text{-}k+1}$ de $S_{AM}$
— 230

$$S_{MV}=\{X_{MV}\} \qquad S_{AM}=\{X_i^{(k)}\} \qquad k \qquad S_{MM}$$

Column $S_{MV}$:

$X_0$ → $X_0Z_1$ → $X_0Z_1$ → $\boxed{XZ_1+\Sigma U_{1i}}$

$XZ_1Z_2 + (\Sigma U_{1i})Z_2$ → $\boxed{XZ_1Z_2+\Sigma U_{2i}}$

$XZ_1Z_2Z_3 + (\Sigma U_{2i})Z_3$ → $\boxed{XZ_1Z_2Z_3+\Sigma U_{3i}}$

$XZ_1Z_2Z_3Z_4 + (\Sigma U_{3i})Z_4$ → $\boxed{\mathbf{XZ_1Z_2Z_3Z_4}}$

Column $S_{AM}$:

$X_1 \qquad X_2 \qquad X_3 \qquad X_4$

$X_1Z_1 \qquad X_2Z_1 \qquad X_3Z_1 \qquad X_4Z_1$

$X_1Z_1+U_{11} \qquad X_2Z_1+U_{12} \qquad X_3Z_1+U_{13} \qquad X_4Z_1$

$U_{11} \qquad U_{12} \qquad U_{13}$

$U_{11}Z_2 \qquad U_{12}Z_2 \qquad U_{13}Z_2$

$U_{11}Z_2+U_{21} \qquad U_{12}Z_2+U_{22} \qquad U_{13}Z_2$

$U_{21} \qquad U_{22}$

$U_{21}Z_3 \qquad U_{22}Z_3$

$U_{21}Z_3+U_{31} \qquad U_{22}Z_3$

$U_{31}$

$U_{31}Z_4$

Column $k$ (iterations): Itération 1, Itération 2, Itération 3, Itération 4

Column $S_{MM}$:

$\varnothing$

$\{Z_1\}$

$\{Z_1,Z_2\}$

$\{Z_1,Z_2,Z_3\}$

$\{Z_1,Z_2,Z_3,Z_4\}$

Figure 6

EP 2 530 867 B1

$S_{MV}=\{X_{MV}\}$

$S_{AM}=\{X_i^{(k)}\}$

k

$S_{MM}$

$\varnothing$

$X_0$

$X_1$

$X_2$

$X_3$

$X_4$

Itér.1

$\{Z_1\}$

$X_0Z_1$

$X_1Z_1$

$X_2Z_1$

$X_3Z_1$

$X_4Z_1$

$X_0Z_1Z_2$

$X_1Z_1Z_2$

$X_2Z_1Z_2$

$X_3Z_1Z_2$

$X_4Z_1Z_2$

$\{Z_1,Z_2\}$

$X_0Z_1Z_2$

$X_1Z_1Z_2$ $+U_{21}$

$U_{21}$

$X_2Z_1Z_2$ $+U_{22}$

$U_{22}$

$X_3Z_1Z_2$

$X_4Z_1Z_2$

Itération 2

$X_0Z_1Z_2$
$+X_1Z_1Z_2+U_1$
$+X_2Z_1Z_2+U_2$
$+X_3Z_1Z_2$
$+X_4Z_1Z_2$
$=XZ_1Z_2+\Sigma U_{2i}$

$U_{21}$

$U_{22}$

$XZ_1Z_2Z_3$
$+(\Sigma U_{2i})Z_3$

$U_{21}Z_3$

$U_{22}Z_3$

$\{Z_1,Z_2,Z_3\}$

$U_{21}Z_3$ $+U_{31}$

$U_{31}$

$U_{22}Z_3$

Itération 3

$XZ_1Z_2Z_3$ $+\Sigma U_{3i}$

$XZ_1Z_2Z_3Z_4$
$+(\Sigma U_{3i})Z_4$

$U_{31}Z_4$

$\{Z_1,Z_2,Z_3,Z_4\}$

Itération 4

$XZ_1Z_2Z_3Z_4$

Figure 7

Figure 8

EP 2 530 867 B1

$S_{MV}=\{X_{MV}\}$  $S_{AM}=\{X_i^{(k)}\}$  k  $S_{MM}$

$X_0$  $X_1$  $X_2$  $X_3$  $X_4$  $\varnothing$

$X_0Z_1$  $X_1Z_1$  $X_2Z_1$  $X_3Z_1$  $X_4Z_1$  $\{Z_1\}$

Itération 1

$(X_0+X_4)Z_1$

$(X_0+X_4)Z_1Z_2$  $X_1Z_1Z_2$  $X_2Z_1Z_2$  $X_3Z_1Z_2$  $\{Z_1,Z_2\}$

$(X_0+X_4)Z_1Z_2$  $X_1Z_1Z_2$  $U_{21}$  $X_2Z_1Z_2$  $U_{22}$  $X_3Z_1Z_2$
$+U_{21}$  $+U_{22}$

$X_0Z_1Z_2$
$+X_1Z_1Z_2+U_{21}$
$+X_2Z_1Z_2+U_{22}$
$+X_3Z_1Z_2$  $U_{21}$  $U_{22}$
$+X_4Z_1Z_2$
$=XZ_1Z_2+\Sigma U_{2i}$

Itération 2

$XZ_1Z_2Z_3$  $U_{21}Z_3$  $U_{22}Z_3$  $\{Z_1,Z_2,Z_3\}$
$+(\Sigma U_{2i})Z_3$

Itér.3

$XZ_1Z_2Z_3Z_4$  $U_{21}Z_3Z_4$  $U_{22}Z_3Z_4$  $\{Z_1,Z_2,Z_3,Z_4\}$
$+(\Sigma U_{2i})Z_3Z_4$

Itér.4

$XZ_1Z_2Z_3Z_4$

Figure 9

Figure 10

Figure 11

36

Figure 12

$k=1$; $S_{MV}=\{X_{MV}\}=\{Z_0\}$
$S_{AM}=\{X_i\}=\varnothing$; $S_{MM}=\{Z_1,...,Z_d\}$ — 300

$k=d+1$? — 305

oui

non

Générer $a_k$
Créer $X_k=a_k$ dans $S_{AM}$ — 310

$X_{MV} \leftarrow X_{MV}+X_k$ — 315

$X_i \leftarrow X_i * Z_k^{-1}$
Supprimer $Z_k$ de $S_{MM}$ — 320

$k \leftarrow k+1$ — 340

Générer $U_{ki}$
(*i=1 à k*) — 325

Fin
$(X_{MV}, X_1,...,X_d)$ — 345

$X_i \leftarrow X_i+U_{ki}$
(*i=1 à k*) — 330

$X_{MV} \leftarrow X_{MV}+\Sigma X_i$
$X_i \leftarrow U_{ki}$
(*i=1 à k*) — 335

EP 2 530 867 B1

Figure 13

k

$Z_0$

$Z_0+a_1$     $a_1$

$(Z_0+a_1)Z_1^{-1}$     $a_1Z_1^{-1}$

$X_i^{[0j]}$    $X_i^{[j]}$

$Z_0Z_1^{-1}+a_1Z_1^{-1}$   $U_0$    $a_1Z_1^{-1}$    $U_1$
$+U_0$             $+U_1$

$a_2$

$a_2Z_2^{-1}$

$Z_0Z_1^{-1}Z_2^{-1}+a_1Z_1^{-1}Z_2^{-1}$   $U_0Z_2^{-1}$    $a_1Z_1^{-1}Z_2^{-1}$    $U_1Z_2^{-1}$
$+U_0Z_2^{-1}$                      $+U_1Z_2^{-1}$

$X_i^{[1j]}$

$Z_0Z_1^{-1}Z_2^{-1}$   $U_{00}$   $U_0Z_2^{-1}$   $U_{01}$   $a_1Z_1^{-1}Z_2^{-1}$   $U_{10}$   $U_1Z_2^{-1}$   $U_{11}$   $a_2Z_2^{-1}$   $U_{21}$
$+a_1Z_1^{-1}Z_2^{-1}$        $+U_{01}$          $+U_1Z_2^{-1}$          $+U_{11}$   $+U_{21}$
$+U_0Z_2^{-1}$                     $+U_{10}$
$+U_{00}$

$a_3$

$a_4$

+

$X_1$    $X_2$   $X_3$   $X_4$

$Z_0Z_1^{-1}Z_2^{-1}Z_3^{-1}Z_4^{-1}+\Sigma X_i$
$=X+\Sigma X_i$

Itération 1   $*Z_1^{-1}$

Itération 2   $*Z_2^{-1}$

Itération 3   $*Z_3^{-1}$

Itér. 4   $*Z_4^{-1}$

$\{Z_1,Z_2,Z_3,Z_4\}$

$\{Z_2,Z_3,Z_4\}$

$\{Z_3,Z_4\}$

$\{Z_4\}$

$\varnothing$

Figure 14

## RÉFÉRENCES CITÉES DANS LA DESCRIPTION

**Documents brevets cités dans la description**

- US 2008260145 A
- EP 2296307 A

**Littérature non-brevet citée dans la description**

- Towards Sound Approaches to Counteract Power-Analysis Attacks. **SURESH CHARI ; CHARANJIT S. JUTLA ; JOSYULA R. RAO ; PANKAJ ROHATGI.** Proceedings of Advances in Cryptology - CRYPTO'99. Springer-Verlag, 1999, 398-412
- DES and differential power analysis (the ''duplication'' method). **LOUIS GOUBIN ; JACQUES PATARIN.** CHES '99, volume 1717 de Lecture Notes in Computer Science. Springer-Verlag, 1999, vol. 1717, 158-172
- **MATTHIEU RIVAIN ; EMMANUEL PROUFF.** *Provably secure Higer-order Masking of AES,* 2010
- Private circuits: Securing hardware against probing attacks. **YUVAL ISHAI ; AMIT SAHAI ; DAVID WAGNER.** CRYPTO, volume 2729 of Lecture Notes in Computer Science. Springer, 2003, vol. 2729, 463-481

- **T.S. MESSERGES.** *Securing the AES Finalists against Power Analysis Attacks,* 2000
- **ELISABETH OSWALD ; STEFAN MANGARD ; NORBERT PRAMSTALLER.** Tower Field in GF(22). *Secure and Efficient Masking of AES - A Mission Impossible ?,* 2004, 134
- **LAURIE GENELLE ; EMMANUEL PROUFF ; MICHAËL QUISQUATER.** *Masquage multiplicati*
- **MATTHIEU RIVAIN ; EMMANUEL PROUFF.** Exponentiation sécurisée. *Provably secure higher-order masking of AES*
- **KAI SCHRAMM ; CHRISTOF PAAR.** Double reculs. *Higher Order Masking of the AES*
- **MATTHIEU RIVAIN ; EMMANUELLE DOTTAX ; EMMANUEL PROUFF.** Simple recalcul. *Block Ciphers Implementations Provably Secure Against Second Order Side Channel Analysis*